(19) Europäisches Patentamt
European Patent Office
Office européen des brevets

(11) **EP 3 021 268 A1**

(12) **EUROPEAN PATENT APPLICATION**

(43) Date of publication:
**18.05.2016 Bulletin 2016/20**

(51) Int Cl.:
***G06Q 10/04*** (2012.01)   ***G06Q 50/00*** (2012.01)
***G06Q 30/02*** (2012.01)

(21) Application number: **15194161.4**

(22) Date of filing: **11.11.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **11.11.2014 TR 201413263**

(71) Applicants:
  • **Vodafone IP Licensing Limited**
    **Newbury, Berkshire RG14 2FN (GB)**
    Designated Contracting States:
    **AL AT BE BG CH CY CZ DE DK EE ES FI FR GB GR HR HU IE IS IT LI LT LU LV MC MK MT NL NO PL PT RO RS SE SI SK SM**
  • **Vodafone Teknoloji Hizmetleri A.S.**
    **34469 Istanbul (TR)**
    Designated Contracting States:
    **TR**

(72) Inventors:
  • **Nuri, Bukrek**
    **34496 Maslak (TR)**
  • **Karadeli, Onur**
    **34496 Maslak (TR)**
  • **Kulaat, Onur**
    **34496 Maslak (TR)**
  • **Calisir, Emre**
    **34496 Maslak (TR)**
  • **Odaman, Selen**
    **34496 Maslak (TR)**
  • **Sever, Murat Mustafa**
    **34496 Maslak (TR)**

(74) Representative: **Boult Wade Tennant**
    **Verulam Gardens**
    **70 Gray's Inn Road**
    **London WC1X 8BT (GB)**

(54) **ESTIMATION OF SUBSCRIBER CHURN BEHAVIOUR IN TELECOMMUNICATION NETWORKS**

(57)     Methods, apparatus, and prediction churn units are provided for remotely sensing and estimating and determining subscriber churn behaviour in a telecommunication network using a subscriber influence analysis. The analysis is based on a summarised weighted direct call graph of subscribers and call detail record (CDR) information between subscriber pairs iterated over a set of time periods. The influence of subscribers to each other is analysed by obtaining said CDRs belonging to subscribers of the telecommunication network to form the call graph. After forming said call graph, an influence map which determines how much each subscriber affects others is obtained using Call Duration (CD), Drop Count (DC), Call Count (CC) and SMS Count call indicators regarding the communication each subscriber makes with its neighbouring subscribers others over the telecommunication network.

FIG. 1a

EP 3 021 268 A1

## Description

Field of the Invention

The invention relates to methods and apparatus enabling the determination and estimation of subscriber churn behaviour in telecommunication networks using a subscriber influence analysis facilitating telecommunication operators in maintaining their subscriber base.

Background of the Invention

In telecommunication systems, especially mobile telecommunication networks, the subscribers of operators providing telecommunication services may change from one network operator to another due to various reasons. This may be referred to as subscriber fluctuation or churning in which a subscriber ends their subscription and opts to subscribe to another operator. Subscriber churning may be due to dissatisfaction with the telecommunication network or services provided by the network operator.

For example, a subscriber may not be satisfied with the services provided by the network operator (e.g. shortage or insufficiency of services) or low quality of service, high costs, etc. The calculation of this shift in preference of the subscribers may be defined as churn approximation, estimation or prediction. Subscriber fluctuation or churn may be referred to as a subscriber leaving a subscription or rescission.

The acquaintances, friends or surrounding individuals whom the subscribers regularly make calls to can have a significant impact on their decision to churn. Consequently, it is highly probable for a subscriber who has previously churned from an operator to influence their acquaintances in this direction. It is important for operators to analyse the reasons for a subscriber churning so they may regain the present subscriber as much as preventing said subscriber adversely affecting their connections.

If operators that accurately perform this analysis can find solutions that increase the satisfaction of subscribers and can focus on certain subscribers, then they will be able to balance the number of subscribers and even move onto a process which may cause the connections of the subscribers they have satisfied to be positively affected. Otherwise, a rapid increase in churners may in time cause uncontrollable issues with subscribers leaving an operator by consciously or unconsciously affecting their surroundings.

US8249231 describes a system and computer software for predicting churners in a telecommunications network in which data relating to interactions of a plurality of subscribers (e.g. customers or users) is obtained. A call graph is formed with a plurality of nodes representing the subscribers and edges representing interactions between the subscribers. Using a sub-set of previously churned subscribers, a spreading activation model is applied to the call graph to identify, based on the graph and the previously churned subscribers, the potential churning subscribers.

US2014/119522A1 describes a system and method for generating subscriber churn predictions using received call detail records (CDRs) from a network operator that detail communication among subscribers of the network operator. The system may determine tie-strengths among subscribers based on said call detail records for generating a net churn influence accumulated at each subscriber from the tie-strengths by propagating churner influence among subscribers due to churn events.

WO2013/106924 discloses a social network analysis for churn prediction by statically and statistically carrying out a call graph analysis.

Management and control of telecommunications networks is also an ongoing problem especially with subscriber churn. Service providers and infrastructure providers are constantly looking for ways to more efficiently use network resources, improve performance, balance network load, reduce risk of malfunction, and/or meet service level agreements.

For telecommunications operators, loyal subscribers provide reliable and long term income and allow the telecommunications operator to continually maintain, expand and improve the communication resources making up the telecommunications network, which is costly. However, it takes a lot of time and expense for a new subscriber to become a loyal subscriber and this process is generally expensive operationally. For this reason, keeping and maintaining the satisfaction of existing subscribers by reducing the churn rate or churn and improving subscriber churn behaviour prediction is of utmost importance.

There is a need for improved churn prediction (estimation) method(s) and apparatus that can sense, detect and/or estimate potential subscriber churn to reduce other subscribers being influenced by the potential churn subscribers and reduce current subscribers that are a state of churning from churning. This may provide a mechanism that allows telecommunication operators to retain and/or gain subscribers and maintain their present subscriber base.

Summary of the Invention

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

Methods, apparatus, and prediction churn units are provided for remotely sensing and estimating and determining subscriber churn behaviour in a telecommunication network using a subscriber influence analysis. The analysis is based on a summarised weighted direct call graph of subscribers and call detail record (CDR) information between subscriber pairs iterated over a set of time periods. The influence of subscribers to each other is analysed by obtaining said CDRs belonging to subscribers of the telecommunication network to form the call graph. After forming said call graph, an influence map which determines how much each subscriber affects others is obtained using Call Duration (CD), Drop Count (DC), Call Count (CC) and SMS Count call indicators regarding the communication each subscriber makes with its neighbouring subscribers others over the telecommunication network.

The prediction (estimation) methods(s) and apparatus enable the possibility of subscriber churning to be reduced and therefore enables subscribers who have the potential to churn by analysing the case of a subscriber being influenced by other churners or subscribers in the state of churning in order to facilitate for telecommunication operators to gain constant subscribers to maintain or expand their present subscriber base and from whom they generate reliable and long-term revenue.

According to a first aspect of the invention, there is provided a method for sensing and estimating subscriber churn behaviour in a telecommunications network including a plurality of subscribers, the network further including a churn prediction unit. The method, performed by the churn prediction unit, including: receiving, from the network, call data associated with the plurality of subscribers; generating a call graph of the plurality of subscribers based on the received call data associated with communications between subscriber pairs;

for each time interval in a set of time intervals,

generating an influence map of how much each of the subscribers affects the other subscribers based on an updated call graph using call data associated with communications between subscriber pairs over the time interval; determining a set of risk values of the subscribers churning based on a subscriber influence analysis of the influence map; and storing the set of risk values of the subscribers for each time interval; and

Estimating a set of potential churn subscribers comprising subscribers who are most likely to churn based on the set of risk values over the set of time intervals.

Preferably, the step of generating the influence map, for each time interval, further including: updating the call graph of the plurality of subscribers based on the received call data of communications between subscriber pairs over the time interval; and determining, for each of the subscriber pairs, an influence weight comprising calculating a weighted sum of call indicator connection weights based on call indicators derived from the received call data of communications between said subscriber pairs over the time interval; wherein the influence weight for each subscriber pair indicates how much a first subscriber of the pair influences a second subscriber of the pair.

Preferably, the step of determining the set of risk values of the subscribers based on a subscriber influence analysis of the influence map, for each time interval, further including: setting a risk value for each subscriber to an initial value;

for each iteration until a maximum number of iterations,

calculating, for each subscriber, a lost risk value and gained risk value associated with each subscriber and their interactions with neighbouring subscribers based on the influence map of the updated call graph; and updating the risk value for each subscriber with the lost and gain risk values; and

storing the risk value for each subscriber in the set of risk values of the subscribers for the time interval.

Preferably, where each time interval in the set of time intervals includes at least one from the group of one or more day(s), one or more week(s), one or more month(s) and one or more year(s).

Preferably, where each time interval in the set of time intervals is different.

Preferably, where estimating the set of potential churn subscribers further includes filtering those subscribers from the set of potential churn subscribers that have call data characterised as atypical.

Preferably, where a subscriber with call data that is characterised as atypical comprises one or more subscribers from the group of: subscribers that have already churned by the most recent time interval; subscribers in which their call data indicates incoming or outgoing call volumes above a maximum call threshold; subscribers in which their call data indicates incoming or outgoing call volumes below a minimum call threshold; and subscribers on a blacklist of subscribers.

Preferably, where: receiving the call data further comprises obtaining call data record, CDR, information belonging to the plurality of subscribers of the telecommunication network, wherein the CDR information comprises data representative of at least the set of call indicators from the group of: Call duration, CD; Drop Count, DC; Call Count, CC; and Small message service, SMS, Count; and determining the influence map further comprises determining the influence map using the obtained set of call indicators.

Preferably, generating the influence map further comprises: determining, for each of the subscriber pairs, a set of call indicator connection weights and based on the set of call indicators, wherein the set of call indicator connection weights for each subscriber pair comprises at least one from the group of: a CD connection weight; a DC connection weight; a CC connection weight; and a SMS Count connection weight; where: said CD connection weight is calculated as the ratio of the CDs between a first subscriber of the subscriber pair and a second subscriber of the subscriber pair to the sum of all CDs for the first subscriber; said DC connection weight is calculated as the ratio of the DCs between a first subscriber of the subscriber pair and a second subscriber of the subscriber pair to the sum of all the DCs for the first subscriber; said CC connection weight is calculated as the ratio of the CCs between a first subscriber of the subscriber pair and a second subscriber of the subscriber pair to the sum of all CCs for the first subscriber; and said SMS Count weight is calculated with as the ratio of SMS counts between a first subscriber of the subscriber pair and a second subscriber of the subscriber pair to the sum of all SMS counts for the first subscriber.

Preferably, determining, for each of the subscriber pairs, an influence weight based on a combination of the set of call indicator connection weights for that subscriber pair with a set of influence coefficients, wherein the set of influence coefficients is determined for each of the call indicator connection weights depending on the significance of the call indicator by the operator.

Preferably, where a set of initial churner subscribers of the plurality of subscribers is determined based on previously churned subscribers from the telecommunication network and the step of determining a set of risk values of the subscribers churning further including: setting the current risk value of each subscriber in the set of initial churner subscribers to an initial value of 1.0; setting the current risk value of the plurality of subscribers, excluding the subscribers in the set of initial churner subscribers, to an initial value of 0.0; and

for a number of iterations until a maximum number of iterations,

for each subscriber in the plurality of subscribers,

calculating a first risk value for said each subscriber that the subscriber loses to its neighbouring subscribers based on the current risk value and a spreading coefficient; calculating a second risk value for said each subscriber that the subscriber gains from its neighbouring subscribers based on the associated influence weight between the subscriber and a neighbouring subscriber; and calculating a third risk value based on current risk value, the first risk value and the second risk value; updating the current risk value to be the third risk value; and

storing the risk value for each subscriber in the set of risk values of the subscribers for the time interval.

Preferably, the step of estimating the set of potential churn subscribers further comprising: determining a set of final risk values for the plurality of subscribers based on: $RiskValue_j = \sum_{i=1}^{N} RiskValue_{j\ Run\ i} * K_{Run\ i}$, where N is the number of time intervals in the set of time intervals, $RiskValue_{j\ Run\ i}$ is the risk value from the set of risk values for the j-th subscriber of the plurality of subscribers and the i-th time interval from the set of time intervals, and $K_{Run\ i}$ is a progressive run coefficient set for time interval i; and estimating the set of potential churn subscribers based on final risk values for the plurality of subscribers.

A method as claimed in any one of claims 1 to 11, wherein churn prediction verification and machine learning for optimising over the set of time intervals based on a

LIFT value expressed as: $LIFT = \dfrac{Percentage\ of\ Successfully\ Predicted\ Churners}{Percentage\ of\ actual\ churns}$

According to another aspect of the invention there is provided an apparatus for estimating subscriber churn behaviour in a telecommunications network comprising a plurality of subscribers, the apparatus comprising a memory unit, a processor unit, and a communication interface, the processor unit coupled to the memory unit, and the communication interface, wherein the memory unit comprises instructions stored thereon, which when executed on the processor unit, causes the apparatus to be configured to: receive, from the network, call data associated with the plurality of subscribers; generate a call graph of the plurality of subscribers based on the received call data associated with communications between subscriber pairs; for each time interval in a set of time intervals, generate an influence map of how much each of the subscribers affects the other subscribers based on an updated call graph using call data associated with communications between subscriber pairs over the time interval; determine a set of risk values of the subscribers churning based on a subscriber influence analysis of the influence map; and store the set of risk values of the subscribers for each time interval; and estimate a set of potential churn subscribers comprising subscribers who are most likely to churn based on the set of risk values over the set of time intervals.

Preferably, the memory unit further comprises instructions stored thereon, which when executed on the processor unit, causes the processor unit to perform one or more of the steps of the method(s) as described herein.

According to another aspect of the invention there is provided a churn prediction unit comprising an apparatus as described herein.

The methods described herein may be performed by software in machine readable form on a tangible storage medium e.g. in the form of a computer program comprising computer program code means adapted to perform all the steps of any of the methods described herein when the program is run on a processor and where the computer program may be embodied on a computer readable medium. Examples of tangible (or non-transitory) computer readable medium or storage media include memory units, hard disk drives, disks, thumb drives, memory cards etc. and do not include propagated signals. The software can be suitable for execution on a parallel processor or a serial processor such that the method steps may be carried out in any suitable order, or simultaneously.

This acknowledges that firmware and software can be valuable, separately tradable commodities. It is intended to encompass software, which runs on or controls "dumb" or standard hardware, to carry out the desired functions. It is also intended to encompass software which "describes" or defines the configuration of hardware, such as HDL (hardware description language) software, as is used for designing silicon chips, or for configuring universal programmable chips, to carry out desired functions.

According to a further aspect of the invention there is provided a tangible computer readable medium comprising computer program code stored thereon, which when executed on a processor of a control unit, causes the processor to perform a method according to the first aspect of the invention and/or the methods described herein.

The preferred features may be combined as appropriate, as would be apparent to a skilled person, and may be combined with any of the aspects of the invention.

Detailed Description of the Drawings

Embodiments of the present invention are discussed below, by way of example only, with reference to the accompanying drawings, in which:

Figure 1a is a schematic diagram illustrating an example communication system according to embodiments;

Figure 1b is a flow diagram illustrating an example method according to embodiments;

Figure 1c is a schematic diagram illustrating another example method according to embodiments;

Figure 2a is a schematic diagram illustrating another example communication system according to embodiments;

Figure 2b is a flow diagram illustrating another example method according to embodiments;

Figure 3 is another flow diagram illustrating another example method according to embodiments;

Figure 4 is a further flow diagram illustrating a further example method according to embodiments;

Figure 5 is an example call flow graph for use with the methods of figures 1a-4;

Figure 6a is a graph illustrating results according to embodiments;

Figure 6b is another graph illustrating results according to embodiments; and

Figure 7 is a schematic diagram of an example apparatus according to embodiments.

Common reference numerals are used, when necessary, throughout the figures to indicate similar features.

It will also be appreciated that although features from each of the embodiments may be identified by different reference numerals in the figures and throughout the description, similar features including the properties and functionality attributed thereto, from one embodiment may be interchangeable with those of another embodiment.

Detailed Description

It is to be appreciated by the skilled person that embodiments of the present invention are described below by way of example only. These examples represent the best ways of putting the invention into practice that are currently known to the Applicant although they are not the only ways in which this could be achieved. The description sets forth the functions of the example and the sequence of steps for constructing and operating the example(s). However, the same or equivalent functions and sequences may be accomplished by different examples.

References in the specification to "one embodiment," "an embodiment," "an example embodiment," "first embodiment," "second embodiment," "third embodiment," or the like, indicate that the embodiment described may include a particular feature, structure, or characteristic, but every embodiment may not necessarily include the particular feature, structure, or characteristic. Furthermore, when a particular feature, structure, or characteristic is described in connection with an embodiment, it is submitted that it is within the knowledge of one skilled in the relevant art(s) to implement such feature, structure, or characteristic in connection with other embodiments whether or not explicitly described.

The inventors have found that it is possible to improve management, control and optimisation of a telecommunications network by remotely sensing and estimating/predicting (or detecting) subscriber churn behaviour in the telecommunications network. Call data is generated whenever a subscriber places a call over the telecommunications network, thereby making the telecommunications network a large sensor capable of detecting and estimating subscriber churn behaviour for use in optimising the telecommunication network to minimise or reduce subscriber churn. Estimating subscriber churn behaviour includes estimating a group of subscribers most likely to churn based on a method that enables the determination of subscribers who will churn with a subscriber influence analysis in the telecommunication network.

Method(s) and apparatus as described herein provide an improved churn prediction method or model for use by telecommunication operators. Briefly, first the Call Detail Records (CDRs) of a plurality of subscribers in the telecommunications network are processed and their influence to each other is analysed. A Weighted Call Graph of the plurality of subscribers in the telecommunication network is obtained by the CDR analysis and is used along with knowledge of subscribers that have churned (e.g. known churners or initial churners) and/or potential subscribers that have churned (i.e. extracted with a previous run or processing by the churn prediction method or model). A risk value representing the risk a subscriber may churn is estimated for each subscriber through an iterative influence analysis, which may be performed over several time intervals (e.g. one or more or several days, weeks, months, and/or years). The risky or already churned subscribers influence their connected subscribers. A set of subscribers and their associated risk values is output. This new set of subscribers is stated, depending on the risk value for each subscriber, as potentially the next term churners.

The churn prediction method(s), algorithm(s) and apparatus as described herein may use eligibility control, filtering and progressive runs (or iterative) techniques to improve the output churn prediction results for subscribers that are estimated to be potential churners. The eligibility control may include filters such that some subscribers are determined to be of a type such as "silent", "corporate/enterprise" and "work intended conversation", which are removed from the churn prediction results. These subscribers do not contribute to the potential churners.

Furthermore, as described herein, during the subscriber influence analysis risk value or energy is distributed between subscribers based on a set of rules rather than providing unlimited spreading during the distribution of risk values and/or energy as performed in conventional methods. For example, during the influence analysis, a subscriber who has already transferred a risk value (or energy) cannot transfer a risk (or energy) again, but can receive risk values (energy) from different subscribers in ongoing repetitions.

Additionally, the estimation or prediction of potential churners continues as much as the determined repetition number or number of predefined iterations, thus only a finite number of iterations is performed. This means that the termination condition of the churn prediction method(s)/algorithm(s) and apparatus is known and can be changed according to the required LIFT etc. As well, the present invention focuses on an iterative approach for a subscriber's second and/or third level interactions, hence the present invention is directed towards individual interactions rather than rather than overall statistics and total approaches performed in conventional churn prediction models.

In addition, determining potential subscribers who will churn provides the advantage of allowing the telecommunications operator to identify portions of the network that may be performing poorly or below the expectations of the subscribers in the group of subscribers most likely to churn. Thus, the telecommunications operator may further optimise the performance of the identified portions of the telecommunications network used by the group of subscribers most likely to churn, i.e. those subscribers who will churn. This may provide the further advantage of minimising or reducing the number of subscribers who will churn.

For example, it is understood that telecommunications networks (e.g. cellular networks or mobile telecommunications networks) are becoming ever more complex. Thus network planning is being made easier and smarter: planning, configuration, management, optimisation and healing of telecommunication networks are being automated to bring about significant improvements in quality of service for each subscriber. As a result, the concept of the Self-Organising Network (SON) is growing in interest and use.

SON is an intelligent platform that can automatically optimise second generation (2G), 3G, 4G and beyond-type networks. The Third Generation Partnership Project (3GPP) has introduced the SON concept into Release 8, and defined a set of use cases that govern a network including the planning, deployment, optimisation and maintenance activities. There are three main areas in which the self-organising network operates, as follows. Self-configuration, also called "plug and play", defines and implements the network parameters automatically, requiring little manual intervention in the network configuration process, and enables more reliable and efficient macro and small cell rollout. Self-optimisation adapts parameters to their optimal value based on cell performance statistics, and replaces repetitive routine operations with automation so that high operational efficiency can be achieved. Self-healing detects network outage automatically and quickly implements revised parameters to compensate, enables the impact on customers due to a failed cell to be minimised.

Although SON can alleviate some of the problems with optimising 2G, 3G, 4G and beyond type networks, SON is actually one of many tools or network performance mechanisms available to service and infrastructure providers for optimising a telecommunications network. What is often forgotten during optimisation of a telecommunications network is the end user experience in the network.

Thus, the churn prediction method and apparatus as described herein may be applied to determine high churn risk subscribers and hence determine the end user experiences of individual subscribers in the network. The output of the churn prediction method and apparatus as described herein may comprise a list of potential high churn risk subscribers and/or indicate a list of subscribers that may potentially churn, which may be analysed and/or input and applied to the nodes and/or network infrastructure implementing the SON functionality to reconfigure and/or optimise those components, base stations, network nodes and elements of the telecommunications network that may improve the performance and/or user experience and quality of service of at least the high churn risk subscribers. This may result in improved user experience for the high churn risk subscribers and reduce the churn of the telecommunications network.

It is also apparent that constant subscribers, i.e. loyal subscribers, provide reliable and long-term revenue for telecommunication operators. It takes time for a new subscriber to become a constant or loyal subscriber and this process is generally too costly in terms of operation. Therefore, it is of great importance to maintain present subscribers whilst maximising the performance of the telecommunications network and reduce the possibility of churning.

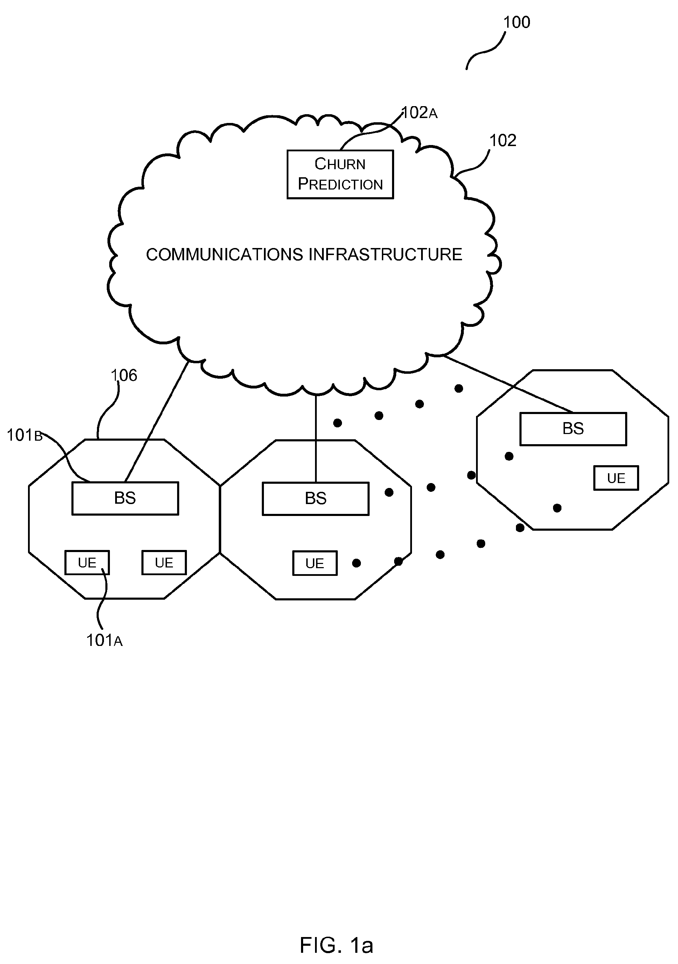

Figure 1a is a schematic diagram of a telecommunications network 100 comprising a plurality of user equipment or mobile devices 101a associated with a plurality of subscribers and telecommunications infrastructure components 102 (e.g. telecoms. infrastructure) that may comprise one or more base stations and/or communication network nodes 101 b with cells 106 for serving the plurality of UEs or mobile devices 101a. The plurality of base stations 101b are connected by links to one or more other telecommunications infrastructure components 102-102a. The links may be wired or wireless (for example, mobile telecommunications core network links, radio communications links, optical fibre, etc.). The telecommunications infrastructure may further include one or more core network(s) that may be in communication with one or more radio access network(s) including the plurality of base stations 101b.

Telecommunications network 100 may comprise or represent any one or more communication network(s) used for communications between UEs or mobile stations 101a and other devices, components, content sources or servers that are connected to the telecommunications network 100. The telecommunication infrastructure and its associated components may also comprise or represent any one or more communication network(s), one or more network nodes, entities, elements, application servers, servers, base stations 101a, network event recorder(s), nodes for encrypting call detail records (CDRs), churn predictor units 102a, customer relationship management (CRM) databases providing CRM files and/or nodes for encrypting subscriber information, decoders, analytical databases for storing and providing predicted high churn risk subscribers and other useful information, or other network devices that are linked, coupled or connected to form telecommunications network.

The coupling or links between base stations 101 b, components 102-102a, and/or network nodes may be wired or wireless (for example, radio communications links, optical fibre, etc.). The telecommunication network 100 and telecommunication infrastructure 102 may include any suitable combination of core network(s) and radio access network(s) including network nodes or entities, base stations, access points, etc. that enable communications between the UEs or mobile stations 101a, base stations 101b and other components 102-102a, network nodes of the telecommunication network 100 and telecommunication infrastructure 102, content sources and/or other devices connecting to the network 100.

Examples of telecommunication network 100 that may be used in certain embodiments of the described apparatus, methods and systems may be at least one communication network or combination thereof including, but not limited to, one or more wired and/or wireless telecommunication network(s), one or more core network(s), one or more radio access network(s), one or more computer networks, one or more data communication network(s), the Internet, the telephone network, wireless network(s) such as the WiMAX, WLAN(s) based on, by way of example only, the IEEE 802.11 standards and/or Wi-Fi networks, or Internet Protocol (IP) networks, packet-switched networks or enhanced packet switched networks, IP Multimedia Subsystem (IMS) networks, or communications networks based on wireless, cellular or satellite technologies such as mobile networks, Global System for Mobile Communications (GSM), GPRS networks, Wideband Code Division Multiple Access (W-CDMA), CDMA2000 or Long Term Evolution (LTE)/LTE Advanced networks or any 2nd, 3rd, 4th or 5th Generation and beyond type communication networks and the like.

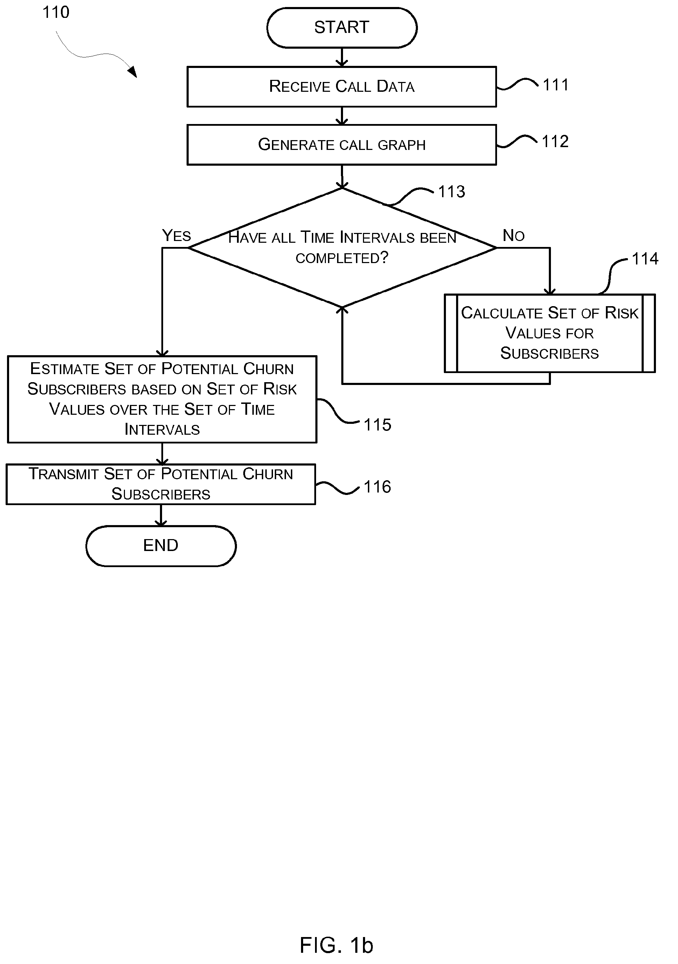

Figure 1b is a flow diagram describing a method 110 for estimating subscriber churn behaviour (or churn prediction) in the telecommunications network 100 including a plurality of UEs or mobile stations 101a and a corresponding plurality of subscribers, the network 100 further including a churn prediction unit 102, the method 100, performed by the churn prediction unit 102, may include the following steps of:

In step 111, receiving, from the network 100, call data associated with the plurality of subscribers. A call graph is generated in step 112, which may include generating the call graph of the plurality of subscribers based on the received call data associated with communications between subscriber pairs. Then, it is queried whether all time intervals of a set of time intervals have been completed in step 113. If the answer of the query is NO, then a set of risk values of subscribers are calculated for the next time interval in step 114. If it is YES, a set of potential churn subscribers based on the calculated set of risk values of the subscribers over the set of time intervals is estimated in step 115, the potential churn subscribers are transmitted in step 116.

The call data associated with communications between subscriber pairs, e.g. communications between a first subscriber and a second subscriber. Thus, the call data may be used to generate a call graph in which each node of the call graph represents a subscriber, and each edge between a pair of nodes represents communications between the associated subscribers represented by that pair of nodes, thus these subscribers make a subscriber pair.

The set of time intervals may comprise or represent one or more time intervals with a start time and an end time, in which each time interval may be defined as a number of time units such as one or more day(s), week(s), month(s), year(s) or any combination thereof. For example, the set of time intervals may be specified as the past 3 weeks. Preferably, the time intervals may be different, but they may also overlap.

For example, an operator may configure the churn prediction unit 102 to perform or operate method 110 to estimate the set of risk values of subscribers churning for the first week of May and with the number of time intervals (e.g. iterations or progressive runs) for steps 113 and 114 being set, by way of example only but is not limited to, to 3, with the time unit as a week. It is to be appreciated that the number of time intervals may be set to any value greater than or equal to 1 as appropriate by the operator or other apparatus. The set of risk values of subscribers churning is calculated using the past three weeks. The set of time intervals may then include the following time intervals: 1) the first week of May; 2) last week of April; and 3) second to last week of April. Thus, the set of risk values for each time interval of the set of time intervals is calculated based on the call data for the subscribers over that time interval. For the first time interval (e.g. first week of May) the call data from 1 May to 7 May (e.g. first week of May) may be includes in the calculation of the set of risk values for subscribers churning over the first time interval. For the second time interval (e.g. last week of April) the call data from 24 April to 30 April (e.g. last week of April) may be included in the calculation of the set of risk values for subscribers churning over the second time interval. For the third time interval (e.g. second to last week of April) the call data from 1 May to 23 April (e.g. second to last week of April) may be included in the calculation of the set of risk values for subscribers churning over the third time interval. This concept may be applied to any other time interval or set of time intervals based on any combination of time units.

In step 114, the calculation of the set of risk values of subscribers for a time interval from the set of time intervals may include the following steps:

- Generating an influence map of how much each of the subscribers affects the other subscribers based on an updated call graph using call data associated with communications between subscriber pairs over the time interval;
- determining a set of risk values of the subscribers churning based on a subscriber influence analysis of the influence map; and
- storing the set of risk values of the subscribers for each time interval.

Once the set of risk values for each time interval of the set of time intervals have been calculated in steps 113 and 114, then a set of potential churn subscribers comprising subscribers who are most likely to churn based on the set of risk values over the set of time intervals is estimated in step 115. This estimate may include, by way of example only but is not limited to, determining the set of potential churn subscribers by calculating a weighted combination of the set of risk values for the subscribers over the set of time intervals.

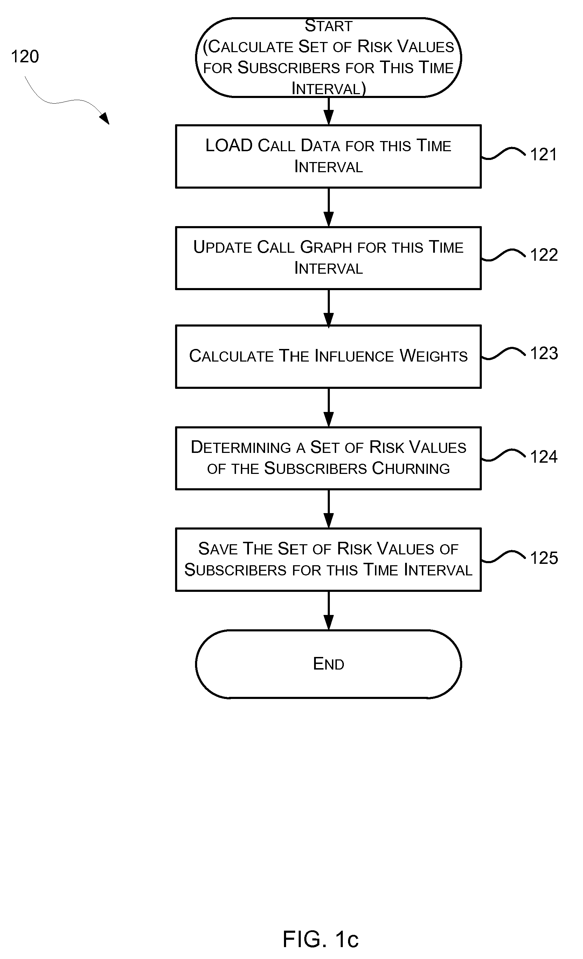

Figure 1c is a flow diagram illustrating an example process or method 120 for the step of 114 when calculating a set of risk values for subscribers over a particular time interval. Call data for the particular time interval is loaded in 121. For example, for the first iteration of the first week of May, call data of the plurality of subscribers from 1 May to 7 May is loaded into the churn predictor unit 102a. The call graph for the plurality of subscribers is updated based on the call data for this particular time interval. This is because the communications between subscribers will change over time, which of course means the call graph needs to be updated for analysing call data for a particular period of time. Influence weights for each pair of subscribers in the call graph are calculated in 123 based on the call data associated with the communications between the pair of subscribers. The influence weights represent how much a subscriber affects another subscriber based on their communications with each other and with the call graph form an influence map. Each edge of the call graph represents communications between a pair of subscribers (i.e. one subscriber and another subscriber), thus an influence weight is calculated for each edge of the call graph and represents an estimate of the influence one subscriber has over another subscriber. A set of risk values of the subscribers churning is then determined based on an analysis of the influence map in step 124. The set of risk values of subscribers for this time interval are saved in 125, and the next time interval is then considered.

Step 123 for calculating or determining, for each of the subscriber pairs, an influence weight may include calculating a weighted sum of call indicator connection weights based on call indicators derived from the received call data of communications between said subscriber pairs over the time interval. The influence weight for each subscriber pair indicates how much a first subscriber of the pair influences a second subscriber of the pair.

The steps 114, 124 and 125 of figures 1b and 1c that relate to determining and saving the set of risk values of the subscribers based on a subscriber influence analysis of the influence map, for each time interval, may further include, by way of example only but is not limited to, the following iterative steps:

- setting a risk value for each subscriber to an initial value;
- for each iteration until a maximum number of iterations (which may be predetermined maximum number of iterations), performing the following process:

  • calculating, for each subscriber, a lost risk value and gained risk value associated with each subscriber and their interactions with neighbouring subscribers based on the influence map of the updated call graph; and
  • updating the risk value for each subscriber with the lost and gain risk values; and

- storing the risk value for each subscriber in the set of risk values of the subscribers for the time interval.

In step 115, the step of estimating the set of potential churn subscribers may further include filtering those subscribers from the set of potential churn subscribers that have call data characterised as atypical. Subscribers with call data that is atypical may be a subscriber with call data that includes subscribers from the group of:

- subscribers that have already churned by the most recent time interval;
- subscribers in which their call data indicates incoming or outgoing call volumes above a maximum call threshold;
- subscribers in which their call data indicates incoming or outgoing call volumes below a minimum call threshold; and
- subscribers on a blacklist of subscribers.

In steps 111 or 121, call data is received or loaded, the call data may include or represent call data associated with call data records (CDR) information and/or customer relationship management (CRM) information belonging to the plurality of subscribers of the telecommunications network 100. For example, the CDR information may include, by way of example only but is not limited to, data representative of at least the set of call indicators from the group of:

- Call duration, CD;
- Drop Count, DC;
- Call Count, CC; and
- Small message service, SMS, Count.

These call indicators may be provided, derived or calculated from the CDR information received. The CDR information may be used to determine the call indicators for each pair of subscribers communicating with each other and thus the CDR information may be used to, by way of example but not limited to, calculate the CD, DC, CC, and/or SMS Count for each pair of subscribers communicating with each other, which may be determined from the call graph. Determining or generating the influence map and/or calculating the influence weights in step 123 may include determining the influence map and/or influence weights using the obtained set of call indicators for each pair of subscribers of the plurality of subscribers in the call graph.

For example, generating the influence map and calculating the influence weights in 123 may further include the following steps:

- determining, for each of the subscriber pairs, a set of call indicator connection weights and based on the set of call indicators, wherein the set of call indicator connection weights for each subscriber pair comprises, by way of example only but is not limited to, at least one from the group of:

  • a CD connection weight;
  • a DC connection weight;
  • a CC connection weight; and
  • a SMS Count connection weight;

The CD connection weight for a subscriber pair may be calculated as the ratio of the CDs between a first subscriber of the subscriber pair and a second subscriber of the subscriber pair to the sum of all CDs for the first subscriber. The DC connection weight for a subscriber pair may be calculated as the ratio of the DCs between a first subscriber of the subscriber pair and a second subscriber of the subscriber pair to the sum of all the DCs for the first subscriber. The CC connection weight for a subscriber pair may be calculated as the ratio of the CCs between a first subscriber of the subscriber pair and a second subscriber of the subscriber pair to the sum of all CCs for the first subscriber. The SMS Count weight for a subscriber pair may be calculated with as the ratio of SMS counts between a first subscriber of the subscriber pair and a second subscriber of the subscriber pair to the sum of all SMS counts for the first subscriber.

Although four call indicators are described herein, this is for simplicity and by way of example only and it is to be appreciated by the skilled person that any number of call indicators may be derived, calculated or determined from the call data and/or defined or provided by the call data associated with the subscribers. Some other call indicators that may be derived or calculated may be call center interaction count, OFFNET/ONNET call ratios, mobile number port frequency, or any other call indicator that may be useful in determining the influence a subscriber may have over other subscribers or may contribute to a subscriber churning, which may impact other subscribers and the like.

Referring to figure 1c, the step 123 may use the call indicator connection weights when determining, for each of the subscriber pairs, an influence weight. The influence weight for a subscriber pair is based on a combination of the set of call indicator connection weights for that subscriber pair with a set of influence coefficients, where the set of influence coefficients is determined for each of the call indicator connection weights depending on the significance of the call indicator by the operator. Alternatively or additionally, a set of influence coefficient weights may be determined based on machine learning or optimisation algorithms using the churn prediction method for predicting churn with known churn data and the like.

For example, the influence weight between a subscriber pair containing a first subscriber $i$ and a second subscriber $j$, may be denoted $w_{i \to j}$, may be a combination of each of the above call indicator connection coefficients for this subscriber pair and may be expressed as, by way of example only but is not limited to:

$$w_{i \to j} = cd\_w_{i \to j} * K_{cd} + dc_{w_{i \to j}} * K_{dc} + cc_{w_{i \to j}} * K_{cc} + sms_{w_{i \to j}} * K_{sms},$$

where $cd\_w_{i \to j}$ is the CD connection weight for this subscriber pair, $dc_{w_{i \to j}}$ is the DC connection weight for this subscriber pair, $cc_{w_{i \to j}}$ is the CC connection weight for this subscriber pair, and $sms_{w_{i \to j}}$ is the SMS count connection weight for this subscriber pair, which for a set of call indicator connection weights for this subscriber pair. These call indicator weights are typically normalised between 0 and 1 and are adjusted such that their sum is a maximum of 1.

The set of influence coefficients may include, by way of example only but is not limited to, $K_{cd}$ an influence coefficient for the CD call indicator, $K_{dc}$ an influence coefficient for the DC call indicator $K_{cc}$ an influence coefficient for the CC call indicator $K_{sms}$ an influence coefficient for the SMS Count call indicator. The influence coefficients (e.g. $[K_{cd}, K_{dc}, K_{cc}, K_{sms}]$) are used to adjust the effect of each of the call indicator connection weights for use in calculating the influence weight $w_{i \to j}$. The influence coefficients are adjusted such that the sum of all influence coefficients equals 1 (e.g. $K_{cd} + k_{dc} + K_{cc} + K_{sms} = 1$).

The set of influence coefficients may be set by the operator when optimising the methods 110 and 120 performed by the churn predictor unit 102a. This may involve machine learning and/or an optimisation algorithm (e.g. iterative optimisation algorithms based on maximising a measure or minimising a measure, or non-linear optimisation algorithms, or even linear optimisation algorithms and the like) for optimising the coefficients and/or performing an iterative process to adjust the coefficients to, by way of example but not limited to, maximise LIFT (a LIFT value or LIFT rate), which may be based on actual numbers of subscribers that have churned over a particular set of time intervals and the predicted numbers of subscribers that have churned over the same set of time intervals. LIFT value or rate may be expressed as:

$$LIFT = \frac{Percentage\ of\ Successfully\ Predicted\ Churners}{Percentage\ of\ actual\ churns}$$

The potential churn subscribers that are estimated may be checked and verified using a churn prediction verification based on the LIFT value.

For example, an iterative method for determining a set of influence coefficients (e.g. $[K_{cd}, K_{dc}, K_{cc}, K_{sms}]$) may include the steps of generating a plurality of sets of influence coefficients, and for each set of influence coefficients of the plurality of sets of influence coefficients, performing the following: predicting subscriber churn from test call data over a set of test time intervals for which subscriber churn is known, and calculating and storing a LIFT value (or other measure) for each set of influence coefficients based on the predicted subscriber churn and known subscriber churn. Thus, a set of the LIFT values is generated, and for the particular test call data (e.g. a particular test scenario), the set of influence coefficients that produces the maximum LIFT value may be considered the "optimum" set of influence coefficients for this test call data.

The step of generating the plurality of sets of influence coefficients may further include generating the plurality of sets of influence coefficients such as $\{K1, K2, ..., KN\}$, where $Kn$ is a set of influence coefficients in which $Kn=[K_{cd,n}, K_{dc,n}, K_{cc,n}, K_{sms,n}]$ for $1 \leq n \leq N$, and $K_{cd,n}, K_{dc,n}, K_{cc,n}$ and $K_{sms,n}$ are values of the influence coefficients for the n-th set of influence coefficients. The values for each set of influence coefficients may be generated such that the sum of all influence coefficients equals 1 (e.g. for $Kn$, $K_{cd,n} + K_{dc,n} + K_{cc,n} + K_{sms,n} = 1$). In addition, the influence coefficient values may also be generated such that each value is less than or equal to 1. For example, based on these conditions, an example plurality of sets of influence coefficients, $\{K1, K2, ..., KN\}$, may, by way of example only but is not limited to, include the values of $\{K1, K2, ..., KN\}= \{[0.9, 0.01, 0.08, 0.01], [0.8, 0.02, 0.08, 0.1], ..., [0.3, 0.3, 0.2, 0.2], [0.3, 0.3, 0.2, 0.1], ..., [0.01, 0.1, 0.8, 0.08]\}$. It is to be appreciated by the skilled person that the influence coefficients for each set of influence coefficients may be assigned or allowed to take on any suitable value as described above.

The steps of predicting may further include, once the plurality of sets of influence coefficients have been generated, each set of influence coefficients is used to estimate or predict the numbers of subscribers that have churned using, by way of example only but not limited to, methods 110 or 120 performed by churn predictor unit over a set of test time intervals for a set of test call data in which the number of subscribers that have churned over the set of test time intervals is known.

The test call data may include a set of call data that is representative of a particular set of subscribers such as, by way of example only but is not limited to, a set of subscribers that belong to a particular company, operator, country or geographical region, and/or a set of subscribers that experience one or more various communication conditions, and/or are set of subscribers that are randomly selected.

The step of calculating the LIFT values may further include calculating a LIFT value for each set of influence coefficients for the set of call test data, where the set of influence coefficients producing a maximum LIFT value may be stored or chosen by the operator as the set of influence coefficients to use. The set of influence coefficients with the highest LIFT value is thus found for the particular set of call test data.

Given that the set of influence coefficients producing the highest or maximum LIFT value is dependent on the set of test call data, a plurality of sets of test call data may be used to generate a one or more sets of influence coefficients, each of which produce the highest or maximum LIFT value for a particular set of test call data of the plurality of sets of test call data. Thus, an operator may generate an optimum influence coefficient list comprising sets of influence coefficients for particular scenarios. The methods 110 and 120 used by the churn predictor unit may then use the optimum influence coefficient list to select a set of influence coefficients by choosing a particular scenario over which to estimate the potential churn subscribers for a set of time intervals and call data.

The optimum influence coefficient list may be recomputed over time based on new test call data and/or changing scenarios. In addition, machine learning approaches may be used in a similar manner to determine optimised set of influence coefficients. This may involve machine learning for optimising the set of influence coefficients and/or performing an iterative process to adjust the coefficients to, by way of example but not limited to, maximise LIFT, and/or minimise a squared error between measures of the predicted and actual subscriber churn, and/or by some other optimisation method.

It may be necessary take into account, over the set of time intervals, one or more sets of initial churner subscribers of the plurality of subscribers that have been determined to have already churned from the telecommunications network during the time interval(s) under which the churn prediction/estimation is being made. Steps 114, 124 and 125 for determining the set of risk values of the subscribers based on a subscriber influence analysis of the influence map, for each time interval, may be further modified to include, by way of example only but is not limited to, the following iterative steps:

- setting the current risk value of each subscriber in a set of initial churner subscribers to an initial value of 1.0;

- setting the current risk value of the plurality of subscribers, excluding the subscribers in the set of initial churner subscribers, to an initial value of 0.0; and

- for a number of iterations until a maximum number of iterations,

    • for each subscriber in the plurality of subscribers,

        1. calculating a first risk value for said each subscriber that the subscriber loses to its neighbouring subscribers based on the current risk value and a spreading coefficient;

        2. calculating a second risk value for said each subscriber that the subscriber gains from its neighbouring subscribers based on the associated influence weight between the subscriber and a neighbouring subscriber; and

3. calculating a third risk value based on current risk value, the first risk value and the second risk value;

4. updating the current risk value to be the third risk value; and

- storing the risk value for each subscriber in the set of risk values of the subscribers for the time interval.

Step 115 of estimating the set of potential churn subscribers may be further modified to determine a set of final risk values for the plurality of subscribers based on:

$$RiskValue_j = \sum_{i=1}^{N} RiskValue_{ji} * K_{ji}$$

where N is the number of time intervals in the set of time intervals, $RiskValue_{ji}$ is the risk value from the set of risk values for the $j$-th subscriber of the plurality of subscribers and the $i$-th time interval from the set of time intervals, and $K_{ji}$ is a (e.g. a progressive run coefficient) coefficient that for time interval $i$. For all subscribers and time intervals a set of progressive run coefficients $\{K_{ji}\}$ may be predetermined or set by the operator and may depend upon the significance of each time interval and other factors. As an option, the progressive run coefficients $K_{ji}$ may be different for each time interval $i$, but may be set for each time interval $i$ to be the same for all subscribers or set for each time interval $i$ to be the same for $M$ subscribers (e.g. $K_{1i} = K_{2i} = \cdots K_{ji} = K_{j+1i} = \cdots = K_{Mi}$). The progressive run coefficients may be set by the operator when optimising the methods 110 and 120 performed by the churn predictor unit 102a, which may involve, by way of example but not limited to, machine learning for optimising the coefficients and/or performing an iterative process to adjust the coefficients to, by way of example but not limited to, maximise LIFT, which may be based on actual numbers of subscribers that have churned over a particular set of time intervals and the predicted numbers of subscribers that have churned over the same set of time intervals.

As described for the determining the set(s) of influence coefficients, a similar iterative method may be applied for determining a set(s) of progressive run coefficients $\{K_{ji}\}$ that may include the steps of generating a plurality of sets of progressive run coefficients for $N$ time intervals and $M$ subscribers. Alternatively or additionally, and for simplicity, when generating the plurality of the sets of progressive run coefficients, the set of progressive run coefficients for the N time intervals may be set to be the same for the $M$ subscribers (e.g. for N=3, $\{K_{ji}\}$ = {[1, 0.5, 0.2], [1, 0.9, 0.8], ..., [0.9, 0.6, 0.5]}, where the set of progressive run coefficients for each of the $M$ users is the same). For each set of progressive run coefficients of the plurality of sets of progressive run coefficients, performing the following: predicting subscriber churn from test call data over a set of test time intervals for which subscriber churn is known, and calculating and storing a LIFT value (or other measure) for each set of progressive run coefficients based on the predicted subscriber churn and known subscriber churn. Thus, a set of the LIFT values is generated, and for the particular test call data (e.g. a particular test scenario), the set of progressive run coefficients that produces the maximum LIFT value may be considered the "optimum" set of progressive run coefficients for this test call data. It is noted that the "optimum" set of influence coefficients could be found first and then used when determining the set(s) of progressive run coefficients. Alternatively, although more computationally intensive, the "optimum" set of influence coefficients and set of progressive run coefficients could be found jointly.

Given that the set of progressive run coefficients producing the highest or maximum LIFT value is dependent on the set of test call data, a plurality of sets of test call data may be used to generate a one or more sets of influence coefficients, each of which produce the highest or maximum LIFT value for a particular set of test call data of the plurality of sets of test call data. Thus, an operator may generate an optimum progressive run coefficient list comprising sets of progressive run coefficients for particular scenarios. The methods 110 and 120 used by the churn predictor unit may then use the optimum progressive run coefficient list to select a set of progressive run coefficients by choosing a particular scenario over which to estimate the potential churn subscribers for a set of time intervals and call data.

The optimum progressive run coefficient list may be recomputed over time based on new test call data and/or changing scenarios. In addition, machine learning approaches may be used in a similar manner to determine optimised set of progressive run coefficients. This may involve machine learning for optimising the set of progressive run coefficients and/or performing an iterative process to adjust the coefficients to, by way of example but not limited to, maximise LIFT, and/or minimise a squared error between measures of the predicted and actual subscriber churn, and/or by some other optimisation method.

Step 115 of estimating the set of potential churn subscribers may be further modified to estimate the set of potential churn subscribers based on the final risk values for the plurality of subscribers by ranking the set of final risk values of the subscribers. For example, ordering the set of final risk value of the subscribers. Additionally or alternatively, the estimation may also rank or order the final risk values for the subscribers and select a subset of subscribers from the set of final risk values of the subscribers that are most likely going to churn. Additionally or alternatively, a predetermined number of the top most subscribers may be selected from the ranked set of final risk values that have a risk value indicating they are most likely going to churn. The predetermined number may be in the order of thousands or millions depending on the action intended to be taken for reducing churn based on the predicted churn.

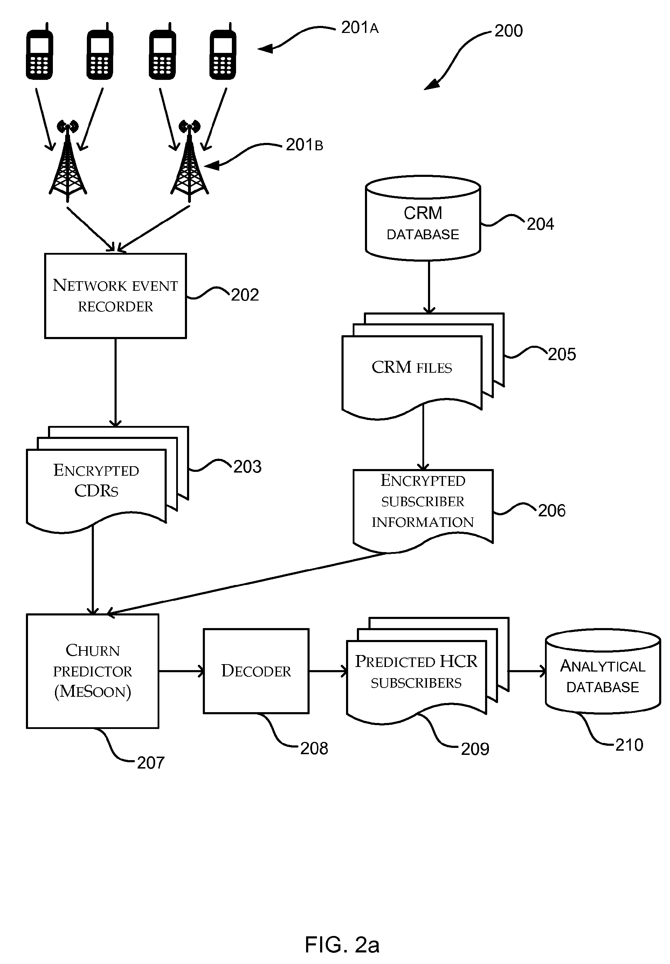

Figure 2a is a schematic diagram of another example telecommunications network 200 illustrating the components of a system for determining or estimating subscribers who will churn with a subscriber influence analysis according to the invention and the interaction among these components. Components of the telecommunications network 200 perform remote sensing of all UE or mobile station 201a telecommunication interactions of subscribers who can communicate with the telecommunications network 200 (e.g. a mobile telecommunication network) having infrastructure such as mobile stations 201a (e.g. a subscriber's mobile phone) and base stations 201 b. For example, telecommunication interactions of the subscribers are recorded by a network event recorder unit 202. The data found in said network event recorder unit 202 are provided to a churn predictor unit 207 as encrypted call detail records (CDRs) 203. At the same time, said churn predictor unit 207 may also receive encrypted subscriber information 206 from provided customer relations management (CRM) files 205 from a CRM database 204.

The CDR information 203 and CRM information 205 may allow the churn predictor unit 207 to sense, detect and/or estimate subscriber churn behaviour such as, by way of example only but not limited to, data representative of predicted or estimated high churn risk (HCR) subscribers 209. The churn predictor unit 207 may make deductions (e.g. estimate HCR subscribers 209) by performing processing in accordance with the method(s) and/or steps detailed below using said encrypted CDRs 203 and CRM subscriber data 206 that is provided to the churn predictor unit 207. Thereby, the churn predictor unit 207 outputs or provides the data obtained from said processing to a decoder 208, which provides decoded data representing the estimated subscriber churn behaviour. The herein decoded data comprises or represents data representative of the predicted high churn risk (HCR) subscribers 209 or HCR subscriber information 209. An HCR subscriber is a subscriber that is most likely to churn or a high probability to churn. The HCR subscriber information 209 is finally recorded in an analytical database 210.

Note, the HCR subscribers 209 are a group of subscribers that are estimated to have a high risk of churning, are most likely to churn, or have a high likelihood of churning. These subscribers are most likely to leave or unsubscribe to the telecommunications network 200 of the current telecommunications operator for another telecommunications network operated by another operator in the near future. Having estimated the HCR subscribers 209, the telecommunications operator may use the HCR information to identify portions of the network used by the HCR subscribers 209 that may be performing poorly or below the expectations of the HCR subscribers 209 (e.g. the group of subscribers most likely to churn). By optimising the performance of the identified portions of the telecommunications network used by the HCR subscribers 209, the HCR subscribers 209 may experience a better user experience and may be less likely to churn. This means that the subscriber churn may be reduced or minimised.

Additionally or alternatively, the HCR subscribers may be provided to customer relationship management, which may target the HCR subscribers and the services provided to these subscribers to reduce the likelihood that these subscribers may leave the telecommunications network. This may involve determining and improving the services provided to these subscribers. Targeting the HCR subscribers by improving the services may also result in the HCR subscribers 209 experiencing, when using their services, a better user experience and may be less likely to churn, which means subscriber churn amongst the HCR subscribers 209 may be reduced or minimised. This in turn minimises the likelihood of other subscribers influenced or connected to the HCR subscribers 209 from churning.

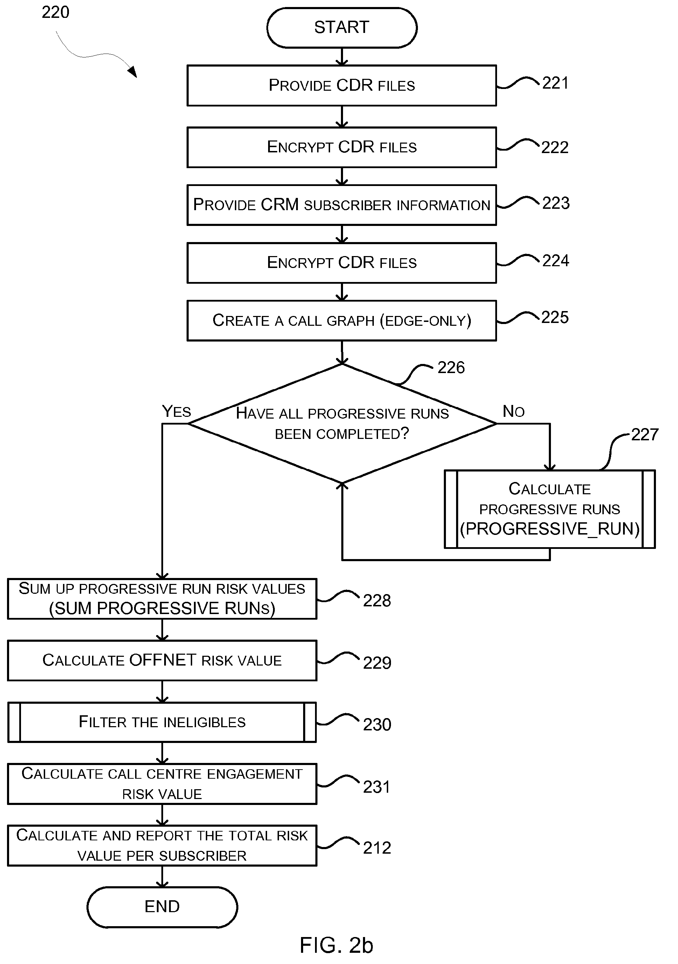

Figure 2b is a flow diagram describing a churn prediction (or estimation) algorithm/model or method 220 according to the invention for analysing the influence of subscribers on each other and may be implemented by components of telecommunications network 200. The model or method may be provided to telecommunication operators to estimate subscriber churn behaviour for minimising or mitigating subscriber churn. The method 220 may include the following steps:

Firstly, the detail records of the calls, i.e. the CDRs (Call Detail Records) files, belonging to the subscribers are obtained or provided in step 221 and the CDR files are encrypted in step 222 in said flow. After the CRM subscriber information is provided in step 223, current CDR files are encrypted in step 224 and a Call Graph is formed in step 225. Then, it is queried whether all progressive runs or iterations (e.g. all time intervals in a set of time intervals) have been completed in step 226. If the answer of the query is NO, the progressive runs risk values are calculated for the next progressive run or iteration in step 227. If it is YES, the progressive run risk values are summed up in step 228 and the OFFNET risk value is calculated in step 229. Then, those unsuitable subscribers are filtered in step 230. After said filtering process, the call centre engagement risk value is calculated in step 231 and the total risk value per subscriber is calculated and reported in step 232.

Referring to step 225, a weighted call graph is obtained with said CDR and an analysis performed in steps 226-232 is used in light of information regarding known churners or potential churners. Herein, the potential churners may be obtained with a conventional churn prediction model. The potential churners influence the related subscribers who are at risk of or are already in the state of churning. This new group of subscribers may be referred to as the next term potential churners or HCR subscribers.

In step 225, a call graph and connections is created or generated after the CDR and CRM information is provided in steps 222-224. The method for predicting or estimating subscriber churn behaviour according to the invention may begin on receiving the required CDR and CRM information by generating, in step 225, a summarised weighted direct call graph for a certain recent time period (e.g., the last week or two weeks, or the last month, etc.) of all subscribers (e.g. a plurality of subscribers in the telecommunication network). This call graph comprises summarised CDR information between subscriber pairs. Additionally or alternatively, on the other hand, as part of the subscribers' privacy, only "verified" subscribers may be used both when the graph is being formed and when the results are being concluded. "Verified" subscribers are clients who have given full consent for their personal data to be used. Subscribers apart from these are neither used nor appear in results.

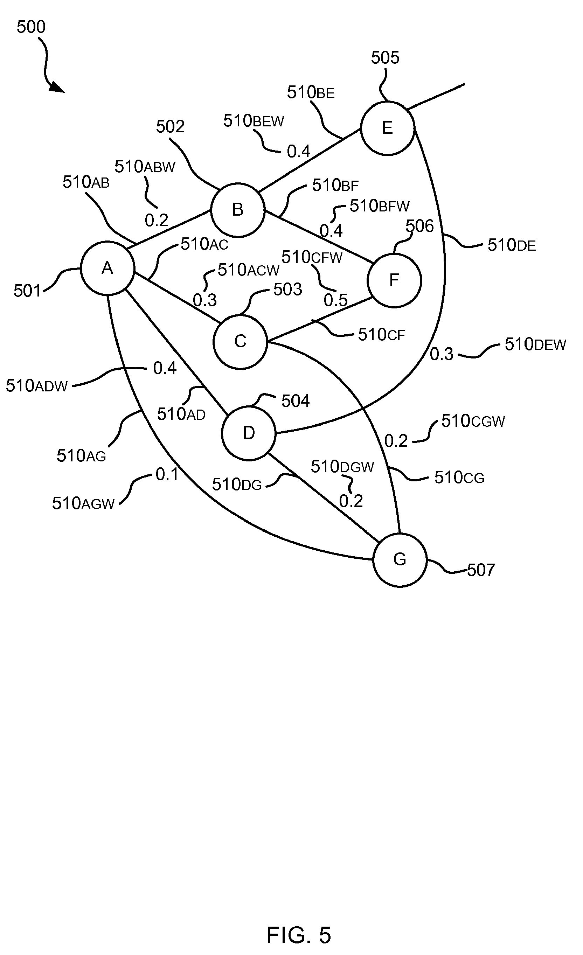

Figure 5 is a schematic illustration of an example call graph 500 of a subscriber A 501 with, by way of example only, subscribers B 502, C 503 and D 504 etc. In this example, each of the subscribers A-G 501-507 is represented by a node and the calls between pairs of subscribers are represented by an edge between two nodes. As can be seen, there are a plurality of edges 510ab, 510ac, 510ad, 510ag, 510be, 510bf, 510cf, 510cg, 510de, 510dg, etc. For example, edge 510ab denotes the calls between subscriber A 501 and subscriber B 502. The weight of an edge captures the strength of the relationship between two nodes. In this example, the call graph 500 has weights 510abw, 510acw, 510adw, 510agw, 510bew, 510bfw, 510cfw, 510cgw, 510dew, 510dgw, etc., on the edges 510ab, 510ac, 510ad, 510ag, 510be, 510bf, 510cf, 510cg, 510de, 510dg, etc., which are used in the algorithm(s), method(s), or process(es) described herein.

The call graph 500 comprises, by way of example only but is not limited to, the following information for subscriber A in relation to subscribers B, C and D:

> A → B entry (input or inlet) and connection summary

> A → C entry (input or inlet) and connection summary

> A → D entry (input or inlet) and connection summary

For example, the connection summary from A to B may contain, by way of example only but is not limited to, the following aggregate information or data:

- Total call count (or Total Number of Calls) (successful) = 225
- Total drop count (or Total Number of Call Drops) = 3
- Total call time (or Total Duration of Calls) = 2068 seconds
- Total SMS (text messages) = 50

This information or data is also summarised for A to C, A to D, A to G,... etc. and other pairs of subscribers. For simplicity, the following is described from the point of view of subscriber A 501, however, it is to be appreciated by the skilled person that the following is applicable and used for any other subscriber pairs. In the end, how long subscriber A 501 is connected to another subscriber (e.g. subscriber B 502, subscriber C 503, subscriber D 503, etc.) or how long it is connected, etc. is known or can be derived from the CDR information.

Although the above information is described with respect to subscriber A 501 in relation to subscriber's B 502, C 503 and/or D 504, this is by way of example only and for simplicity, it is to be appreciated by the person skilled in the art that other subscribers B 502, C 503, D 504, E 505, F 506 and G 507 may also have similar information and connection summaries based on calls between these subscribers B-G 502-507 and other subscribers A-G 501-507.

After building the Call Graph for the plurality of subscribers in the telecommunication network, it is identified how much each subscriber affects each other. That is the influence. The "influence" is the ratio between, i.e. subscriber A 501 and subscriber B 502, which identifies how much subscriber B 502 will get affected by subscriber A 501. For example, to build an influence map of subscriber A 501, an influence, influence weight (or cumulative connection coefficient or weight) is collected and calculated from "weights" of connections of subscriber A 501 (or connection weights of subscriber A 501) (e.g. A-B, A-C, A-D, A-G, etc.). The influence weights of subscriber A 501 are calculated from the combination of several call indicators that are used to form connection weights of subscriber A 501. The call indicators can be derived or obtained from the CDR data information associated with subscribers A 501, B 502, C 503, D 504 and/or G 507 as described in further detail herein.

Although the above is described with reference to subscriber A 501, it is to be appreciated by the skilled person that a similar process or calculation may be performed for other subscribers to generate the influence map of the other subscribers along with the collection and calculation of the "weights" of connections of the other subscribers (or connection weights of the other subscribers) etc.

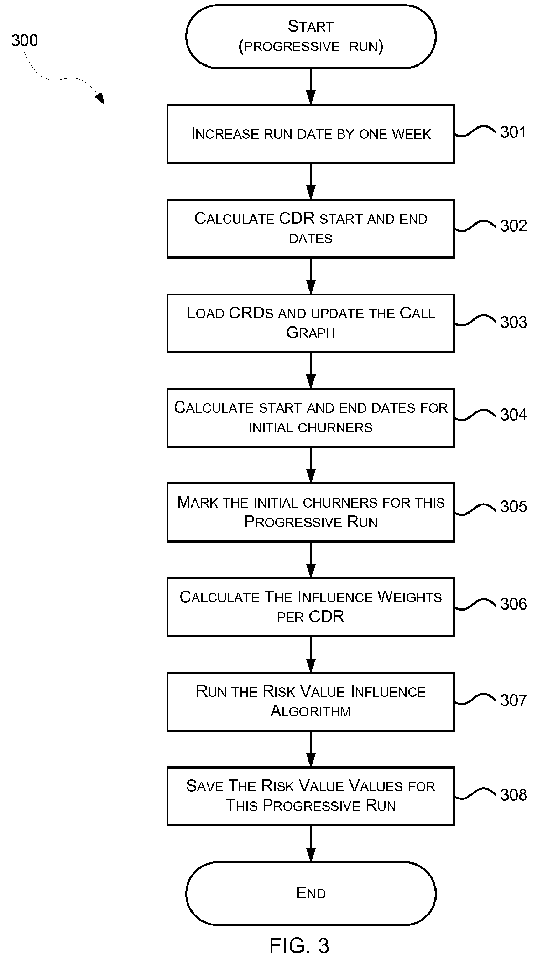

Figure 3 is a flow chart illustrating an example progressive run algorithm, process or method 300 that is performed in steps 226 and 227 of figure 2b. In step 226, it is queried whether all iterations or progressive runs of the progressive run algorithm, process or method 300 have been completed. If the answer of the query is NO, then another iteration or run of the progressive run method 300 is performed/calculated in step 227. The steps of the progressive run method 300 is as follows:

In said progressive run algorithm 300, the run date is increased, by way of example but not limited to, a week in step 301 and the CDR begin and end dates are calculated in step 302. Then, the CDRs are loaded and the Call Graph is updated in step 303. After the begin and end dates for the initial churners have been arranged in step 304, the initial churners are marked for this progressive run 305. Afterwards, the influence weights per CDR are calculated in step 306 and a risk value influence algorithm, process or method 307 is run. In the end, the algorithm, process or method 300 is terminated in step 308 by saving or storing the risk value values for this progressive run.

At the end of the progressive run, step 226 of the method 220 is performed, where it is queried whether all progressive runs of the progressive run algorithm, process or method 300 have been completed. If the answer of the query is NO, then another run of the progressive run method 300 is performed/calculated in step 227, and the above method 300 is performed again. This is an iterative method that iteratively calculates the risk values for subscribers in the telecommunications network. The number of iterations of the iterative method 300 is typically selected to be a finite number of iterations or runs.

After the call graph 500 has been formed in step 225 and the progressive run algorithm/method 300 has been initiated in steps 226 and 227, how much each subscriber (e.g. each of subscribers A-G 501-507) influences another subscriber is determined in step 306, which may be called an influence or influence weight (also may be referred to as a cumulative connection coefficient or weight, etc.). The influence, for example between subscriber A 501 and subscriber B 502, is a ratio determining how much subscriber B 502 is influenced by subscriber A 501. Step 306 of the progressive run algorithm/method 300 calculates the influence weights based on CDR data or information of each subscriber.

The connection coefficients or weights for a subscriber A 501 are summed up or combined and calculated to form an influence map of subscriber A (e.g. A-B, A-C, A-D, A-G), where the influences between subscriber A 501 and the other subscribers 502-504 and 507 connected to subscriber A 501 are depicted as an influence weight for that subscriber A 501. For example, figure 5 illustrates the influences or influence weights (or cumulative connection coefficients or weights) between A-B, A-C, A-D, and A-G by the influence weights 510abw, 510acw, 510adw and 510agw on edges 510ab, 510ac, 510ad and 510ag, respectively, of call graph 500. It is to be appreciated that each of these weights 510abw, 510acw, 510adw and 510agw on edges 510ab, 510ac, 510ad and 510ag may be referred to as an influence or an influence weight (or cumulative connection coefficient, and/or a cumulative connection weight, etc.) or any other suitable definition, which may be used interchangeably throughout this description.

Similarly, the connection coefficients or connection weights for subscribers B 502, C 503, D 504, E 505, F 506 and G 507 and hence influences are also calculated accordingly. The following describes, by way of example and for simplicity, the calculation of the connection coefficients or weights and influence(s) or influence weight(s) (or cumulative connection coefficients or weights) of subscriber A 501, but it is to be appreciated by the skilled person that the connection coefficients or weights and influence(s) or influence weight(s) of subscribers B 502, C 503, D 504, E 505, F 506 and G 507 etc., may be similarly calculated.

For example, each of the connection coefficients or weights of subscriber A 501 can be calculated with, by way of example only but not limited to, the following four call indicators:

- CD = Call Duration

- DC = Drop Count

- CC = Call Count

- SMS Count = Number of SMS

Although four call indicators are described herein, this is for simplicity and by way of example only and it is to be appreciated by the skilled person that any number of call indicators may be derived, calculated or determined from the call data and/or defined or provided by the call data associated with the subscribers. Some other call indicators that may be derived or calculated may be call center interaction count, OFFNET/ONNET call ratios, mobile number port frequency, or any other call indicator that may be useful in determining the influence a subscriber may have over other subscribers or may contribute to a subscriber churning, which may impact other subscribers and the like.

For subscriber A 501, each call indicator parameter somewhat influences the calculated influence(s) or influence weights 510abw, 510acw, 510adw and 510agw as stated below. In other words, each call parameter affects the corresponding influence weight or influence by some amount. The following describes the calculation of the influence weight(s) (e.g. cumulative connection coefficient(s) or weight(s)) 510abw, 510acw, 510adw and 510agw for subscriber A 501.

The call duration (CD) connection coefficient for A->B is:

$$cd\_w_{A\to B} = \frac{cdA \to B}{\sum cdA}$$

The correlation above signifies that compared to A and other connections, the CD connection coefficient for A -> B (e.g. $cd\_w_{A\to B}$) is obtained by dividing the total CD between A->B (e.g. $cdA \to B$) with the total CD of A (e.g. $\sum cdA$) and other connections. Similarly, the connection coefficients for other call parameters are as follows:

Drop Count (DC) connection coefficient:

$$dc\_w_{A\to B} = \frac{dcA \to B}{\sum dcA}$$

The DC connection coefficient for A -> B (e.g. $dc\_w_{A\to B}$) is obtained by dividing the total DC between A->B (e.g. $dcA \to B)$ with the total DC of A (e.g. $\sum dcA$).

Call Count (CC) connection coefficient:

$$cc\_w_{A\to B} = \frac{ccA \to B}{\sum ccA}$$

The CC connection coefficient for A -> B (e.g. $cc\_w_{A\to B}$) is obtained by dividing the total CC between A->B (e.g. $ccA \to B)$ with the total CC of A (e.g. $\sum ccA$).

SMS Count connection coefficient:

$$sms\_w_{A\to B} = \frac{smsA \to B}{\sum smsA}$$

The SMS Count connection coefficient for A $\to$ B (e.g. $sms\_w_{A\to B}$) is obtained by dividing the total SMS Count between A->B (e.g. $smsA \to B$) with the total SMS Count of A (e.g. $\sum smsA$).

The influence or influence weight (e.g. cumulative coefficient or weight) 510abw (e.g. $w_{A\to B}$) between A and B is a weighted combination of each of the above call indicator connection coefficients, where the influence weight between A and B is expressed as:

$$w_{A\to B} = cd\_w_{A\to B} * K_{cd} + dc\_w_{A\to B} * K_{dc} + cc\_w_{A\to B} * K_{cc} + sms\_w_{A\to B} * K_{sms}$$

All the call indicator connection coefficient values are normalised between 0 and 1 and the total coefficients for subscriber A 501 are made to a maximum of 1.0. K (e.g. $K_{cd}, K_{dc}, K_{cc}, K_{sms}$) is a set of coefficients (also called a set of influence coefficients) for the call indicator parameters CD, DC, CC and SMS Count. Some call indicator parameters may be more effective than others. Thus, K is used to adjust the effect of each of the call indicator parameters accordingly. For example, if the CD call indication parameter is found to be somewhat more effective compared to the SMS Count call indication parameter, then, in this case, it may be more significant for it to be adjusted, by way of example only but not limited to, to $K_{cd}$ = 0.4 and $K_{sms}$ = 0.1. For consistency, the sum of all Ks must be 1 (e.g. $K_{cd} + K_{dc} + K_{cc} + K_{sms}$ = 1), however this is not mandatory.

As described with reference to figures 1a-1c, the set of coefficients K (or set of influence coefficients) may be set by the operator, or optimised, by way of example only but not limited to, using a similar iterative method as described with reference figures 1a-1c. This may also involve machine learning for optimising the coefficients K and/or performing an iterative process to adjust the coefficients K to, by way of example but not limited to, maximise LIFT (a LIFT value or LIFT rate), which may be based on actual numbers of subscribers that have churned over a particular set of time intervals and the predicted numbers of subscribers that have churned over the same set of time intervals.

Figure 5 illustrates an exemplary application where the effects / influence weights between subscriber A 501 and all connections thereof are calculated is depicted. This process was carried out for obtaining a Weighted Call Graph using a plurality of subscribers of an operator, or a selected subscriber list of an operator, or even the whole subscriber list of an operator.

Although the influence weight (or cumulative coefficient or weight) 510abw (e.g. $w_{A \to B}$) between subscribers A and B 501 and 502 has been described above, it is to be appreciated by the skilled person that the influence weight (and/or cumulative coefficient or weights) 510ijw (e.g. $w_{i \to j}$) between subscriber i and subscriber j are similarly calculated or derived. For example, for each of the subscribers A 501, B 502, C 503, D 504, E 505, F 506 and G 507, etc., the influences or influence weights (or cumulative coefficients or weights) 510abw, 510acw, 510adw, 510agw, 510bew, 510bfw, 510cfw, 510dew, 510dgw etc., for the call graph 500 may be calculated or derived as described above.

Referring back to the churn prediction algorithm/method 220 of Figure 2b, steps 222-224 described obtaining and processing call data such as CDR data or information. CDR data is one of the inputs of the churn prediction algorithm, process or method 220. A CDR may comprise or include call parameters such as, by way of example only but not limited to, type of package, International Mobile Subscriber Identity (IMSI), Mobile Station International Subscriber Directory Number (MSISDN), dropped call, call count, mobile country code, mobile network code, local area code, cell ID, start time, end time, type of call, type of package, calling party, receiving party. These parameters determine other parameters such as type of call, interaction time, call duration, drop count, sms count etc.

The CDR data can be transferred to the churn prediction unit 207 from the network event recorder(s) 202. In order to manage this, there may be META steps (i.e. further steps) prior to processing CDRs by the churn prediction unit 207. For example, the first step may consists of or include collecting MSISDN based data and converting these into common publishing format (CPF) files based on time. CPF files are filtered (only relative files) and compressed CDR files.

Given the large number of subscribers for each telecommunication network, it is to be appreciated that a huge quantity of storage is required to store the CDR records of each subscriber. One of the significant issues herein is the ability to save CDR data without any losses. Additionally, saving large amounts of physical data as time passes is also a major issue. As saving CDR data on a single machine is not practical or possible, distributing CDR data to more than one computer may also cause many analysis difficulties. In order to overcome these issues and save CDR data, Hadoop Distributed File System (HDFS) stands out as the most ideal solution in churn prediction algorithms with its abilities is, by way of example but not limited to, listed below as:

- Despite the single computer hardware limitation, it keeps data in distributed machines;
- Each CDR eliminates losses of files by copying the data onto different discs;
- It authorises parallel calculation in distributed discs; as a result, the elapsed time for the churn prediction algorithm may be reduced;
- It eliminates a second data recording layer by directly processing on CDRs (CPF as in the example)
- It presents balanced solutions to data arrays such as ApacheFlume within HDFS.

In addition to the CDRs and CRM files that are input, the initial churners (ICs) or previous churners are one of the main inputs to the method 220, and hence the progressive run method 300. For example, the initial churners are those subscribers that have recently churned (e.g. subscribers that have churned in the past two weeks or the past month, etc.) and are selected as *"already churned subscribers"*. In step 304 of method 300, after the begin and end dates for the initial churners have been arranged, the initial churners are marked for this progressive run in step 305. The ICs may be represented, by way of example but not limited to, an IC file containing all the subscribers that have churned over a period of time in the past. For instance, if the process date (e.g. the date that the process 220 and/or 300 is executed for) is 15 May and the begin and end dates for the initial churners comprises a two week time interval prior to 15 May, then the ICs file that is determine for input will include ICs comprising or including subscribers or individuals having recanted (e.g. already churned) from their subscriptions of the telecommunications network and/or operator between 1 to 14 May (i.e. the previous two weeks prior to 15 May).

In step 307 of the progressive run method 300, a risk value influence algorithm, process or method 307 is executed/run. The risk value spread is a measure of previous churners (or initial churners) relatively affecting present subscribers (i.e. subscribers that have not churned or discontinued their subscription of the telecommunications network or operator). For example, when the Directed Weighted Call Graph 500 is formed, during operation of method 220 in steps 226 and 227 of figure 2, a risk value influence method 307 may be initiated during each iteration of the progressive run method 300 for estimating risk values or influence risk values in relation to subscriber churn behaviour. The risk value influence method 307 includes operations or steps as follows:

1. Initial churners are loaded or set with a 1.0 Risk Value (e.g. Current Risk Value (or present risk value) for initial churners = 1.0);
2. Other remaining subscribers are loaded or set with a 0.0 Risk Value (e.g. Current Risk Value (or present risk value) for remaining subscribers = 0.0);
3. Until the number of the largest adjustable cycle (e.g. until the number of iterations reaches MAX_ITERATION), for all subscribers, the updated call graph 500 and the influences or influence weights (or cumulative coefficients or weights) between subscribers i and j (e.g.) determined from step 306 may be used in the following:

a. Each subscriber loses an amount of Risk Value to its neighbour (e.g. a lost Risk Value is deducted). The Risk Value lost in this cycle is equal to the multiplication of the subscribers' present Risk Value (e.g. Current Risk Value) and K (a distribution or spreading coefficient);

b. Each subscriber gains an amount of Risk Value from its neighbour (e.g. a gained Risk Value that is added). The gained Risk Value depends on the effect (or weight) between two subscribers. That is, the gained Risk Value depends on the influence coefficient (or cumulative coefficient or weight) between two subscribers (e.g. the influence weight (or cumulative coefficient or weight) 510abw (e.g. $w_{A \to B}$) between subscriber A and subscriber B; or, more generally, the influence or influence weight (and/or cumulative coefficient or weights) 510ijw (e.g. $w_{i \to j}$) between subscriber i and subscriber j). The influence weights (e.g. cumulative coefficients or weights) were determined in step 306; and

c. The final Risk Value at the end of a cycle for each subscriber is as follows:

$$\text{present\_Risk Value (Current Risk Value)} = \text{present\_Risk Value (Current Risk Value)} + \text{gained\_Risk Value} - \text{lost\_Risk Value.}$$

The following rules are applied during the progressive runs method 300, these rules are outlined as follows:

Rule 1: If a subscriber has already lost Risk Value from previous iterations (cycles), that subscriber will not lose any again. This is to avoid an endless Risk Value transfer between these subscribers.

Rule 2: OFFNET subscribers do not gain Risk Value. This is due to OFFNET subscribers not being able to churn easily. As a result, ONNET subscribers cannot transfer Risk Value to OFFNET subscribers. This case causes an amount of Risk Value to accumulate onto the subscriber even if there are initial churners.

Rule 3: The subscribers on a blacklist do not gain Risk Value. Subscribers on the blacklist are those who do not continuously and regularly make calls or do not receive calls such as call centre numbers of companies (e.g., 4440xxx). As subscribers on the blacklist cannot influence others to churn, they also cannot be influenced by anyone. The list of subscribers on the blacklist is clearly provided as an input file. Similarly, OFFNET subscribers and ONNET subscribers cannot transfer "energy" (i.e. Risk Value) to subscribers on the blacklist.

Rule 4: New churners will distribute Risk Values in the first iteration (cycle). For instance, there is no possibility of an already churned subscriber to churn again.

Additionally or alternatively, the Risk Values may be calculated using a "negative influence" in which each Risk Value may be defined in terms of an energy. The risk value influence algorithm, process or method 307 may be further modified to further include the following operations or steps:

1. Initial Churners are loaded or set with a 1.0 Negative Energy value (Current Energy value for the initial churner subscribers);

2. All remaining subscribers are loaded or set with a 0.0 Energy value (Current Energy of remaining subscribers);

3. Up to (configurable) MAX_ITERATION number of turns or iterations the following is performed:

a. Each subscriber loses some of its Energy to their neighbouring subscribers (e.g. other subscribers connected to that subscriber). The lost energy during this turn is equal to subscribers current energy multiplied by K (a spreading coefficient);

b. Each subscriber, gains some energy from their neighbouring subscribers. The gained energy depends on the influence or influence weight between two subscribers (e.g. also referred to as influence coefficient, cumulative connection coefficient or weight, and/or $w_{i \to j}$ between subscriber i and subscriber j that were previously calculated);

c. The final energy value at the end of the iteration or turn for each subscriber is as follows:

$$\text{current\_energy value} = \text{current\_energy value} + \text{gained\_energy value} - \text{lost\_energy value.}$$

The following rules are applied during the progressive runs method 300 when modified to include Risk Values based on "negative influence", these rules are outlined as follows:

Rule 1: If a subscriber has already lost energy value from previous iterations (turns), that subscriber will not lose any again. This is to avoid an endless energy transfers between these subscribers.

Rule 2: OFFNET subscribers do not acquire energy. This is due to OFFNET subscribers not being able to churn. Consequently, ONNET subscribers do not transfer energy to OFFNET subscribers. This will cause some energy to be accumulated on the subscriber even when they are initial churners.

Rule 3: Blacklisted subscribers DO NOT acquire energy. Blacklisted subscribers are enterprise call centres, (e.g. +4440xxx numbers in Turkey, or any other kind of call centre numbers etc.), which will continuously make calls and get incoming calls. Blacklisted subscribers will not churn, nor do they influence anyone else. The list of blacklisted subscribers may be explicitly given as an input file. Similarly, in the case of OFFNET subscribers ONNET subscribers do not transfer any energy to Blacklisted subscribers. This will cause some energy to be accumulated on the subscriber even when they are an initial churner.

Although calculating Risk Values using "negative influence" or "energy" has been described above, it is to be appreciated by the person skilled in the art the method calculating Risk Values using the "negative influence" or "energy" may be applied to the method 307 or similar methods and apparatus as described herein. Although the following description describes the progressive run method 300 in which Risk Values are calculated based on method 307, it is to be appreciated by the skilled person that this description of the progressive run method 300 may be applied to the progressive run method 300 based on calculating Risk Values based on "negative influence" "energy" as described herein. Although these two methods are described separately, it is to be appreciated by the skilled person that one or more of the feature(s) of these methods may be combined. That is the advantages of both methods may be harnessed together, concurrently or in parallel to form an appropriate churn prediction method/model or unit/apparatus according to the invention.

Figure 2b steps 226 and 227 describe performing progressive runs of the progressive run method 300 of Figure 3. In order to obtain good results for churn prediction, a Progressive Runs logic was developed and implemented in step 228 of the churn prediction method 220. For a determined number of progressive runs, the system processes risk value distribution and sums up the results by going back one or more periods, e.g. a period such as a week, etc. For instance let us assume that a friend of a subscriber has churned the previous week and another close friend has churned this week. In this case, the subscriber will be influenced twice. The influence of previous churners will be less compared to new ones. The absolute coefficient in each run (process) may be determined by the user (typically, they may be optimised in the learning phase). For example, let us presume that the churn prediction is operated to obtain the risk of subscribers churning of the first week of May, and the number of progressive runs is set to, for simplicity and by way of example only but is not limited to, 2, in which the progressive week coefficients are set at 1.0 and 0.6. It is to be appreciated that the number of progressive runs may be, by way of example only but not limited to, any other number of runs, iterations, or time intervals greater than or equal to 1. Instead of just its churners of the past week (4th week of April), the system goes back a further week and also calculates the Risk Value Effect of the 3rd week of April. The total (Influential) Risk Value of a subscriber X is the cumulative sum of the Influential Risk Values of these two runs.

$$RiskValue_X = RiskValue_{Run\ 1} * K_{Run1} + RiskValue_{Run\ 2} * K_{Run2}$$

The $RiskValue_X$ is the final Risk Value for each subscriber at the output of the progressive run method 300. This final Risk Value is calculated using a weighted combination of the final Risk Values after each of the progressive runs as calculated in the progressive run method 300. For example, $RiskValue_{Run\ 1}$ is the final Risk Value for a subscriber after progressive run 1, $RiskValue_{Run\ 2}$ is the final Risk Value for the subscriber after progressive run 2, where $K_{Run1}$ is the progressive run coefficient set for progressive run 1 (e.g. progressive week coefficient for the first week run) and $K_{Run2}$ is the progressive run coefficient set for progressive run 2 (e.g. progressive week coefficient for the second week run). The step 228 effectively performs a weighted sum up of the progressive run final Risk Value(s) for each subscriber and output by each progressive run of the progressive runs method 300.

For a determined number, N, of progressive runs (or cycles, iterations, or time intervals) the total (Influential) Risk Value of a subscriber X is the cumulative sum of the Influential Risk Values of the N runs (iterations, cycles or time intervals) and may be expressed as:

$$RiskValue_X = \sum_{i=1}^{N} RiskValue_{Run\ i} * K_{Run\ i}$$

The $RiskValue_X$ is the final Risk Value for each subscriber at the output of the progressive run method 300, $K_{Run\ i}$ is the progressive run coefficient set for progressive run $i$. As described with reference to figures 1a-1c, the progressive run coefficients $\{K_{Run\ i}\}$ for N runs or time intervals (e.g. a set of progressive run coefficients) may be set by the operator, or optimised, by way of example only but not limited to, using a similar iterative method as described with reference figures 1a-1c. This may also involve machine learning for optimising the progressive run coefficients $\{K_{Run\,i}\}$ for $N$ runs or time intervals and/or performing an iterative process to adjust the progressive run coefficients $\{K_{Run\,i}\}$ for N runs or time intervals to, by way of example but not limited to, maximise LIFT (a LIFT value or LIFT rate), which may be based on actual numbers of subscribers that have churned over a particular set of time intervals and the predicted numbers of subscribers that have churned over the same set of time intervals.

In step 229 of the churn prediction method 220, an OFFNET risk value is calculated for each subscriber. The OFFNET call ratio is a whole statistic which affects a subscriber's probability of churn. For instance, by way of example but is not limited to, subscriber A 501 may have 40 out of a total 100 calls that are OFFNET numbers. If 40 out of a total of 100 calls are OFFNET numbers, subscriber A's OFFNET ratio will be 40/100 = 0.4. The OFFNET call ratio may be determined for each of the plurality of subscribers in the telecommunication network 200. The higher the OFFNET ratio, the higher the possibility of the subscriber churning. After the OFFNET call ratio for a subscriber has been multiplied with a predetermined coefficient, it may be applied to the Risk Value (or Influential Risk Value) for that subscriber as determined in step 228.

Once the risk values (or influential risk values) for each subscriber have been determined, these may be stored as one or more list(s), one or more candidate churner list(s), a list of HCR subscribers 209, one or more list(s) of subscriber risk values or may be stored as one or more groups of list(s) of subscriber risk values, where each group is associated with a particular type of subscriber. In step 210 of the churn prediction method 220, a list of subscriber risk values or a candidate churner list may be filtered to determine which subscribers are suitable as subscribers that are estimated to be the most likely subscribers to churn. That is, the list of subscriber risk values may be filtered or analysed to determine the HCR subscribers 209 (e.g. a list of HCR subscribers or a list of candidate churners etc.). This is because not all subscribers (e.g. customers) are inclined to churn and these subscribers (e.g. customers) are removed by being filtered from the final list, final list of HCR subscribers, or final candidate churner list.

Eligibility of a subscriber to be on the list is then decided because not all subscribers are prone to churn out of the telecommunication network 200. These subscribers may be filtered out of the final result of list. For example, silent subscribers may be removed from the list. Some subscribers have very few interactions and may be called silent subscribers. The total incoming calls and outgoing calls thereof for these subscribers are very few. These subscribers are generally *"already churned"*. This is because these subscribers do not use the telecommunications network 200 often enough to be considered regular use subscribers. It has been found that the elimination of silent subscribers from the list or the marking of subscribers as "silent" on the list substantially increases the churn prediction success rate.

For a subscriber to be considered silent, either 1) the Total Number of Incoming Calls may be less than the number of defined minimum incoming calls (e.g. a threshold SILENT_MIN_INCOMING_CALLS may be set); or 2) the Total Number of Outgoing Calls may be less than the number of defined minimum outgoing calls (e.g. a threshold SILENT_MIN_OUTGOING_CALLS may be set). For example, let us assume that both the SILENT_MIN_INCOMING_CALLS and SILENT_MIN_OUTGOING_CALLS threshold values are determined and set, by way of example only but is not limited to, to be 5. If a subscriber only has 3 outgoing calls and 7 incoming calls, then this subscriber will be marked as *"silent"* on the list and/or may be removed from the list.

Another type of unsuitable subscriber is enterprise or company subscribers in which some MSISDNs may make an extremely high number of calls. These are generally company call centres or small business purposed work solutions (e.g. water station, local restaurants, call centres etc.). Similar to blacklisted numbers, these subscribers also never influence other subscribers (or people) or these do not have the possibility to churn. For a company subscriber to be considered an unsuitable subscriber: either the Total Number of Incoming Calls needs to be more than the number of defined maximum of incoming calls (e.g. a threshold MAX_INCOMING_CALLS) or the Total Number of Outgoing Calls needs to be more than the number of defined maximum outgoing calls (e.g. a threshold MAX_OUTGOING_CALLS) is set).

For example, let us assume, by way of example only and not limited to, that both the MAX_INCOMING_CALLS and MAX_OUTGOING_CALLS threshold values are determined and set, by way of example only but is not limited to, to be 5000. If a subscriber only has 6000 outgoing calls and 1000 incoming calls, then this subscriber could be marked as *"company subscriber"* on the list and/or may be removed from the list.

Another type of unsuitable subscriber are blacklisted subscribers. For example, known call centre numbers or subscribers may be removed by being filtered and these are never churners. Alternatively or additionally, the call center numbers of subscribes may be marked on the list as *"blacklisted"*. Operator call centre numbers may also be among a set of blacklisted numbers or subscribers.

In addition, initial churners are unsuitable subscribers; initial churners are not described as potential initial churners as they have already churned. Initial churners have already left the telecommunications network 200; however, the information associated with these subscribers is required for the progressive runs method 300 as they affect the risk values of potential initial churners and other subscribers in the telecommunications network 200. Thus, once a list is estimated (e.g. a list of subscriber risk values, a candidate churners list, etc.), the initial churners are removed from the list (e.g. a candidate churners list) or the initial churners are marked as *"initial churner"*.

The final list of subscribers or final candidate churners list may be the list that is left after removing the unsuitable subscribers or extracting all those subscribes that have not been marked as unsuitable.

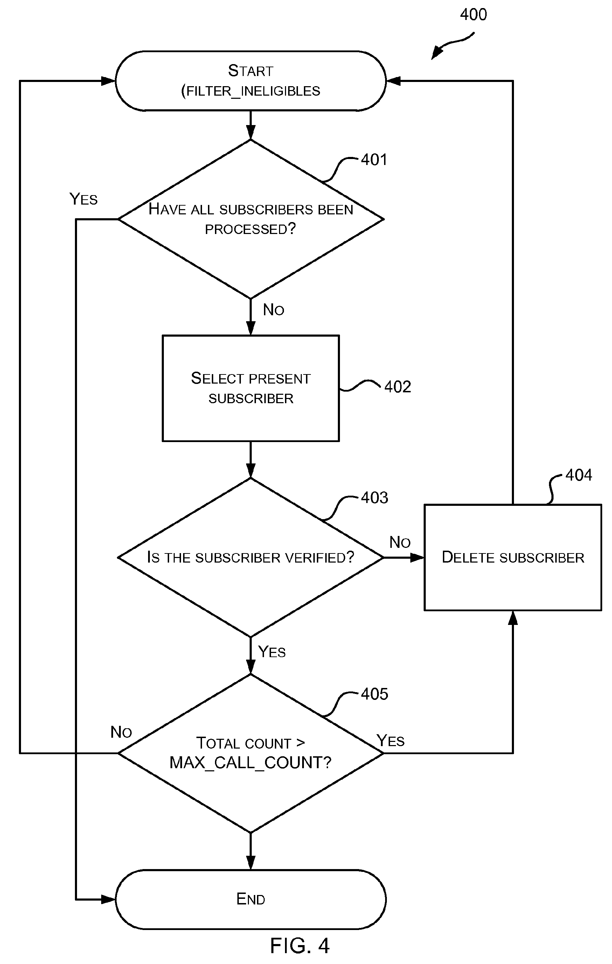

Figure 4 is a flow diagram illustrating an example filtering algorithm, process or method 400 for filtering from the list (e.g. list of subscriber risk values) those subscribers found to be unsuitable. The filtering method 400 may include the following steps:

At the beginning, in step 401, it is controlled or determined whether all subscribers have been processed. If all the subscribers have been processed, then the method 400 proceeds to step 406 and the algorithm/method 400 is terminated. If all the subscribers have not been processed, then the method 400 proceeds to step 402 where a present subscriber (e.g. the next subscriber in the list) is selected. In step 403, it is determined or controlled whether said selected subscriber is verified to be suitable or not. The verification of the selected subscriber may be based on, by way of example only but is not limited to, the above filtering examples. If the selected subscriber is not verified as suitable, then in step 404, the selected subscriber will be deleted from the list. However, if the selected subscriber is verified as suitable, then, as a final check, in step 405, it is determined and/or controlled whether the total call count number for that subscriber is higher than the determined maximum number of calls (e.g. Total Count > MAX_CALL_COUNT?). If the TOTAL COUNT > MAX_CALL_COUNT then the selected subscriber may be an ineligible subscriber (e.g. a call center, *"company subscriber"* or a subscriber that may skew the influence or churn prediction results etc.) and so this selected subscriber may be deleted from the list. However, if the Total Count is less than or equal to the MAX_CALL_COUNT, then this selected subscriber is kept on the list and the method proceeds to the start of method 400 for filtering further ineligible subscribers.

In step 210, once the ineligible subscribers or unsuitable subscribers have been filtered from the list (e.g. a final list or final candidate churn list, etc.), a further adjustment to the subscriber risk values is performed on the filtered list. This adjustment is based on the operator call centre (CC) engagement factor in addition to influence. The operator CC is the CC of the telecommunications network 200 that subscribers call for complaints or cancelling subscription etc. The CC numbers of operators are generally called for complaints or mobile number portability (MNP). Similarly, rival CC numbers are also used with call numbers comprised of similar digits for this objective. From the point of view of a subscriber, the more a call centre is called by the subscriber, the higher the possibility of that subscriber churning. Thus, operator CC engagement risk value is determined and after the operator CC engagement risk value has been multiplied with a predetermined coefficient, it is applied to the Risk Value (Influential Risk Factor) for each subscriber in the filtered list (e.g. final list or final candidate list).

After the filtered list has been adjusted by the CC engagement risk value, the churn prediction method 220 proceeds to step 212 in which the churn prediction results are finalised and reported. The churn prediction results may be output as a list of "total" or "final" risk values per subscriber (e.g. a risk values for few MSISDNs or a plurality of MSISDNs). The list may be arranged according to the final calculated Risk Values in which all types of subscribers (e.g. pre-paid, post-paid, etc.) are listed separately. Thus, multiple files or lists may be obtained. The output list may comprise all, some, or a selected number of the MSISDNs of the operator when or at the time the churn prediction method 220 is operated. Existing or present active subscribers (e.g. customers) in this list already contains dedicated subscribers (e.g. customers) and new customers, which may be separated.

The list may include, by way of example only but is not limited to, a column of MSISDNs and a column of risk values based on percentage values in the list that mark *"candidate churners".* The list may be represented as separate lists or as one list that is presented as a columned CSV file, or any other suitable format for storing the required subscriber risk value information. Alternatively or additionally, the list may include several columns including subscriber identity column of subscriber identities (e.g. Encrypted MSISDNs), subscriber type column of subscriber types (e.g. Type of Subscriber), Risk Value column of risk values for each subscriber, and a Percentage column of corresponding percentage values (e.g., 0 - 100). For example, a low percentage value for a subscriber in the percentage column may refer to a high possibility of churning (e.g. one percent may represent the highest risk and one hundred percent may represent the lowest risk). Although as described above a low percentage value referred to a high possibility of churning and a high percentage value referred to a low possibility of churning, it is to be appreciated by the skilled person that the method(s) 220 and 300 may be configured such that a high percentage risk value represents a high possibility of churning and a low percentage risk value represents a low possibility of churning.

Alternatively or additionally, the list may include a plurality of rows corresponding to the subscribers and several columns including a column for the subscriber identity (e.g. MSISDNs) and a column of risk values (e.g. as a percentage value, any other flag, value or indication of risk). A subscriber may be at risk of churning should the risk value reach or is greater than or less than a certain or desired churn threshold. Alternatively or additionally, a subscriber may be considered safe from churning should the risk value reach or is greater than or less than a certain or desired non-churn threshold.

Although the list output from the method 300 may be filtered, this may be filtered into lists of candidate churn subscribers, and lists associated with unsuitable subscribers such as, by way of example but not limited to, MSISDNs on the blacklist, unsuitable company MSISDNs, silent MSISDNs and OFFNET MSISDNs.

The churn prediction results that are output as a list may be tested or verified to generate churn prediction verification results. Churn prediction verification is carried out with the comparison between the churn prediction results and the true subscriber churn list of the telecommunication network operator obtained after the predicted time interval is terminated.

Hereafter, the results are analysed using a LIFT value, which can be understood as a ratio of two percentages, the ratio of: a) the percentage of successfully predicted churners over the predicted time interval (e.g. 1 month) made by the method(s) 220/300; to b) the percentage of actual churns in the test data or over the predicted time interval (e.g. 1 month). Thus, the LIFT value may be written as:

$$LIFT = \frac{Percentage\ of\ Successfully\ Predicted\ Churners}{Percentage\ of\ actual\ churns}$$

Alternatively or additionally, the results may be analysed using another LIFT value, which is calculated by determining the ratio of proportioning the relative percentage of the port out (churn) and the whole port out (churn) ratio for a given time interval.

$$LIFT = \frac{Ratio\ of\ Successfully\ Predicted\ Churners}{Actual\ port\ out(or\ churn)\ ratio}$$

The actual port out (or churn) ratio is the total number of subscribers divided by the whole subscriber base who have ported out (churned) from the whole subscriber base during a given amount of time (e.g., 1 month). As an option, the ratio of successfully predicted churners may be the number of successfully predicted churners divided by the actual number of churners.

The percentage of successfully predicted churners is the percentage of the total number of subscribers who have churned out of the HCR (High Churn Risk) list during a given time period (e.g., 1 month). The HCR list is a list, in which the subscribers are arranged according to Risk Value. The size of the list is determined by the user or operator. Typically, the shorter the size of the HCR list is, the larger the LIFT value is. The HCR size may depend on the action to be used (e.g. offer for better service, improvements or optimisation in the telecommunications network associated with the subscribers on the HCR list) after the churn prediction results are computed and output and how this is notified (e.g., SMS, Direct call, etc.) to the subscribers on the HCR list.

The churn prediction algorithm verification is carried out with a test set of a telecommunication network operator. After the algorithm parameters/coefficients have been set, the LIFT values below are as a result taken from the algorithm. The LIFT values test set for 3 different tests may be seen below.

Only the Legacy CVM (Customer Value Management) table shows the LIFT ratios found with a legacy CVM.

Only the CDR based table shows the LIFT ratios obtained using a new approach presented with the present invention.

Whereas the legacy CVM + CDR based table shows the LIFT ratios obtained by combining and intersecting the best percentages of the two approaches.

Present CVM based prediction

| Actual Churn Ratio | Prediction Success Ratio | LIFT |
|---|---|---|
| 0,36% | 1,32% | 3,62 |

CVM + CDR based prediction

| Actual Churn Ratio | Prediction Success Ratio | LIFT |
|---|---|---|
| 0,36% | 2,27% | 6.34 |

The following arrangement is used for the tests above:

- About 0.1 percent of the whole subscriber base is used
- 1 week is used as the churn verification period

The method(s) 220/300 may be further modified to include parameter/coefficient/ and/or weight optimisation with machine learning. As described previously, various CDR and global parameters are applied while calculating the final list and/or an HCR list. The combination of each interaction influences the success rate of the prediction. The most general approach is to use the parameters based on connections through a learning system. First of all, this learning system analyses old CDRs (e.g. about 3-6 months old), old initial churners and old true churners. As the "true churners" are known for system optimisation, the system can train itself for the best parameters/coefficients/ and/or weights to use.

The optimum values for the parameters may vary depending upon external factors such as the following:

- The used operator of the country
- Strength and weakness of the operator
- Located present time dynamics.

As expected, a group of optimum parameters may be obtained throughout the system learning phase using machine learning. There will not be a group of BEST parameters on its own for each true case. While some parameters may display 1% better performance, while another group of parameters may present 10% better success.

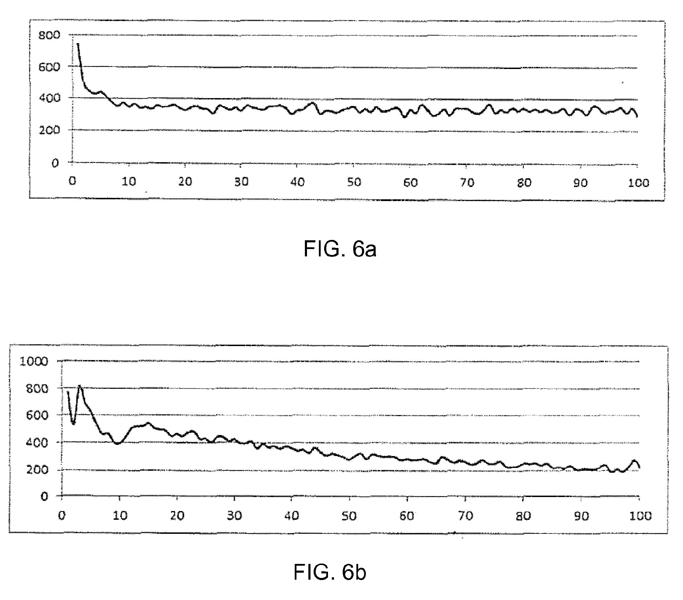

Figure 6a provides graphs regarding churning success ratios for light ineligibility and Figure 6b provides graphs regarding churning success ratios for strong ineligibility.

Referring to figure 6a displays successful prediction ratios for light ineligibility. Accordingly, MINIMUM_CALL_COUNT = 5 and MAXIMUM_CALL_COUNT = 1000 were selected. For instance, if a subscriber has made 5 or less calls or if he/she has made 1000 or more calls within a determined time (e.g., 3 weeks), he/she is removed from the analysis.

Figure 6b displays successful prediction ratios for strong ineligibility. Accordingly, MINIMUM_CALL_COUNT = 50 and MAXIMUM_CALL_COUNT = 700 were selected. For instance, if a subscriber has made 50 or less calls or if he/she has made 700 or more calls within a determined time (e.g., 3 weeks), he/she is removed from the analysis.

While light ineligibility provides better and more balanced results in the 10% quantile, strong ineligibility provides better results in the 1% and 5% quantiles. Therefore, the size of the Risk List that is to be selected while optimising system parameters/coefficients/ and/or weights is important.

In churn prediction algorithm results, the LIFT values can show that the type of subscriber (customer) influence has an effect on the subscriber's behaviour.

The algorithm/method(s) 220 and/or 300 according to the invention provides the best results for pre-paid subscribers in all the percentage values. In other words, pre-paid subscribers are directly affected from their social surroundings. At the same time, the algorithm/method(s) 220 and/or 300 also provides the best values for billed (e.g. post-paid) subscribers. Post-paid subscribers are also influenced by their social surroundings, yet this is not as much as prepaid subscribers. It was seen that subscribers' contracts or device deals for a certain time, e.g. a year were also effective as with social interactions and that the behaviour of subscribers presented some change for post-paid subscribers.

The churn prediction algorithm/method 220 provides the lowest results for corporate (company) subscribers. Corporate subscribers are also influenced by their social surroundings, yet the most effective factor is the long-term contracts with the telecommunication operator of the corporate company.

All the subscriber LIFT values are mostly influenced by the number of subscribers in each subscriber subgroup. The post-paid subscribers in our above test set are more than other types of subscribers. Thus, the result of the whole subscriber base fundamentally has similarities with the results of post-paid subscribers.

At the same time, the results show that the churn prediction algorithm/method 220 displays the best results for 1%. As the HCR percentage increases for other percentages, the churn prediction algorithm/method 220 lift ratios decrease. This situation means the risk values intensify for very social subscribers and subscribers with many issues with operators. Subscribers with many issues may also be predicted with other algorithms or methods; however the risk value from the social surroundings of the subscriber is directly risk effective on these subscribers. Additionally, the churn prediction algorithm/method 220 provides the most social subscribers within the group of subscribers and these are mostly 1 %. The results prove that risk value distribution is a good usage scenario for churn prediction, active subscriber retention plans and marketing. As subscribers with a high risk value may be used for positive and negative predictions. In addition, risk value distribution or the risk values estimated by the churn prediction algorithm/method 220 may also be used for optimising a telecommunications network 200 by identifying HCR subscribers and identifying and targeting the network elements/components to improve user experience and/or performance of the telecommunications network 200 for those identified HCR subscribers.

Another important lesson of the result analysis is the fact that the predictions for the near future entirely coincide with the churn prediction algorithm/method 220 described herein. When the churn prediction table is verified with the true churners after both one week and four weeks, the estimated lift values were found to fall from week to week after the prediction had been made.

Once the Churn Prediction Result list and/or HCR lists have been output they need to be effectively and/or efficiently used to reduce or minimise the churn in relation to HCR subscribers. In some scenarios, churn prediction or estimation may be used to form and start an offer for risky subscribers (e.g. HCR subscribers) by the Customer Value Management (CVM) team of a telecommunications operator. The number of targeted or aimed subscribers is an important factor for generating an offer.

If the offer is of the *"direct contact"* type, then the HCR list size becomes an important factor. Therefore, a targeted selection of HCR subscribers is necessary to efficiently target and contact each HCR subscriber. As the number and time of subscriber contact personnel is limited, such offers will need to address a manageable number of subscribers such as, by way of example only, 1K or 10K (e.g. 1 thousand or 10 thousand) subscribers or in the order of thousands, rather than targeting or aiming at millions of subscribers.

Other types of offers may aim or target wider subscriber bases. For such offers, efficient contact methods may comprise automatically manageable SMS or e-mails. The target HCR subscriber base for such offers may be a wider group such as, by way of example only but not limited to, 1M (e.g. 1 million) or in the order of millions.

The success rate of out the churn prediction algorithm/model/method(s) 220 or 300 may be evaluated with a "no-action prediction list". "No-action prediction" means not contacting the subscribers in any way yet, tracking churn cases. While applying this churn prediction algorithm's/model's/method's 220 or 300 outputs (e.g. by making offers, etc.) it is also not significant to calculate its success. As successful churn predictions/estimations will prevent churning, the LIFT ratios will automatically decrease. Thus, it is important to use a control list while calculating success of predicting subscribers that will churn. This control list may be comprised of subscribers who have not had any processes/offers performed on them.

In addition to making offers using CVM personnel, the telecommunications network 200 may make use of the knowledge of the lists as described herein (e.g. HCR subscriber list) to make targeted optimisations in the telecommunications network 200 towards those subscribers identified to be HCR subscribers. By identifying HCR subscribers from the churn prediction/estimation lists (e.g. candidate churner list, final lists, HCR lists etc.) and analysing the behaviour of the HCR subscribers the telecommunications network 200 may be optimised in relation to the HCR subscribers. For example, one or more network component(s) or element(s) may use the HCR list of subscribers identify and target the corresponding network elements/components such as base stations 201b and other network infrastructure to which the HCR subscribers access via their mobile devices 201a. These base stations 201b or other network infrastructure may be reconfigured to further optimise the performance of the network in relation to the HCR subscribers. By improving the performance of the telecommunications network 200 for the HCR subscribers, the HCR subscribers may then notice an improvement in their user experience, which may further delay, mitigate, decrease or avoid churn of the HCR subscribers.

Given the targeted optimisation of the telecommunications network is towards HCR subscribers, due to the scarce and finite amount of communications resources of telecommunication networks it is inevitable that some portions of the telecommunications network 200 may perform poorly for non-HCR subscribers. This is because communication resources are finite so some resource will be taken away from non-HCR subscribers to satisfy the HCR subscribers. Even so, given the churn prediction algorithm(s)/method(s) 220 and/or 300 as described herein may be executed at any time and the changes in the HCR subscribers will be monitored, any dissatisfied non-HCR subscribers will eventually be captured into the HCR list and thus become satisfied subscribers with the optimisations of the telecommunication network 200 being targeted to HCR subscribers.

The number of HCR subscribers that may be targeted will depend on the communication resources of the telecommunications network that can be targeted towards those identified HCR subscribers whilst at the same time maintaining a certain quality of service or a level of performance to satisfy non-HCR subscribers. The target HCR subscriber base for such optimisation may, depending on the available communication resources, be a wide flexible range such as, by way of example only but not limited to, 1 K to 1M (e.g. 1 thousand to 1 million) or in the order of thousands to millions of subscribers. Depending on the number of HCR subscribers being targeted, the targeted optimisation to the network infrastructure of the telecommunications network 200 may be staggered over the non-HCR subscribers, which should be a larger group than the number of HCR subscribers.

As described above, a churn prediction method and apparatus have been described for sensing and estimating subscriber churn behaviour in telecommunication networks. The method and apparatus may be configured for determining or estimating subscribers who will churn with a subscriber influence analysis, in which a summarised weighted direct call graph of subscribers comprising CDR information between subscriber pairs within a certain period relating to the recent times (or time interval) in terms of, by way of example only but not limited to, days, weeks, months and/or years, where the influence of subscribers to each other is analysed by obtaining said CDRs belonging to subscribers of a telecommunication network is formed.

After forming said call graph, an influence map which determines how much each subscriber affects others is obtained using Call Duration (CD), Drop Count (DC), Call Count (CC) and SMS Count call indicators regarding the communication each subscriber makes with others through a telecommunication system. Connection weights or coefficients for each call indicator are calculated and combined to form an influence or influence weight. For example, the said call duration connection weight (e.g. call duration parameter) is calculated with all the call durations between a subscriber and another subscriber to the sum of all call durations of a subscriber ratio; the drop count connection weight (e.g. drop count parameter) is calculated with all the drop counts between a subscriber and another subscriber to the sum of the drop count ratio; the call count connection weight (e.g. call count parameter) is calculated with all the call counts between a subscriber and another subscriber to the sum of all call counts ratio; the SMS count connection weight (e.g. SMS count parameter) is calculated with all the SMS counts between a subscriber and another subscriber to the sum of all SMS counts ratio.

Additionally, the cumulative coefficient (weight or influence, influence coefficient etc.) between subscribers is the combination of each connection weight or coefficient (e.g. call indicator parameters), and this is obtained with the sum of the individual multiplications of the call duration, drop count, call count and SMS count connection weights (or parameters) with an influence coefficient determined exclusive to each parameter depending on the significance of the parameter by the operator.

While making churn predictions regarding determining churners with a subscriber influence analysis, an influence process flow (algorithm) is applied, in which the initial churners are loaded with a 1.0 Risk Value, other subscribers are loaded with a 0.0 Risk Value and each subscriber loses an amount from its risk value to its neighbour and the lost risk value in the said cycle is equal to the multiplication of the present risk values K (distribution or spreading coefficient) of the subscribers, each subscriber gains an amount of risk value from their neighbour and the gained risk value depends on the influence (weight) between two subscribers, the final risk value at the end of the cycle for each subscriber is calculated as follows:

$$present\_ Risk\ Value = present\_Risk\ Value + gained\_ Risk\ Value - lost\_Risk\ Value$$

until the previously determined largest cycle (MAX_ITERATION) number.

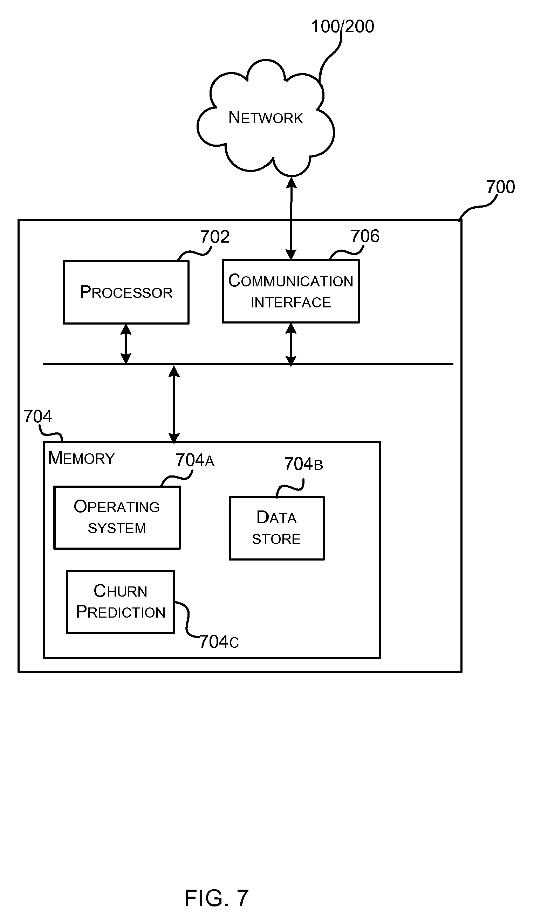

Figure 7 is a schematic diagram of an example computing-based device 700 which may be implemented to include the functionality of the algorithm(s), method(s), and/or process(es) as described herein with respect to figures 1a-6b and, by way of example only but not limited to, with respect to an apparatus or churn prediction unit 102a or 207 of the telecommunications network 100 or 200.

The computing-based device 700 comprises one or more processors 702 which may be microprocessors, controllers or any other suitable type of processors for processing computer executable instructions to control the operation of the device in order to perform estimation of subscriber churn behaviour, estimation or prediction of subscriber churn, or churn prediction for telecommunication network 100 or 200 as described in the process(es) and method(s) as described herein and with reference to figures 1a-6b. In some examples, for example where a system on a chip architecture is used, the processors 702 may include one or more fixed function blocks (also referred to as accelerators) which implement the algorithm(s), method(s) and/or process(es) as described herein in hardware (rather than software or firmware).

The software and/or computer executable instructions for causing one or more processor(s) 702 (or processor unit(s)) to perform or implement the algorithm(s), method(s), and/or process(es) may be provided using any computer-readable media that is accessible by computing based device 700. Computer-readable media may include, for example, computer storage media such as memory 704 (or memory unit) and communications media. Computer storage media, such as memory 704, includes volatile and non-volatile, removable and non-removable media implemented in any method or technology for storage of information such as computer readable instructions, data structures, program modules or other data. The computer-readable media may be a tangible computer readable medium comprising computer program code stored thereon, which when executed on a processor of a computing device, causes the processor to perform one or more algorithm(s), method(s), and/or process(es) as described herein and with reference to figures 1a-6b.

Memory 704 may store platform software and/or computer executable instructions comprising an operating system 704a, data store 704b for storing results etc., and churn prediction 704c or any other suitable platform software may be provided at the computing-based device to enable application software to be executed on the device. Depending on the functionality and capabilities of the computing device 700 and application of the computing device, software and/or computer executable instructions may include the functionality of performing estimation of subscriber churn behaviour, estimation or prediction of subscriber churn, or churn prediction for telecommunication network 100 or 200 as described in the process(es) and method(s) as described herein and/or the functionality of the churn prediction unit 102a or 207 according to the invention as described with reference to figures 1a-6b.

The software and/or computer executable instructions may be provided using any computer-readable media that is accessible by computing based device 700. Computer-readable media may include, for example, computer storage media such as memory 704 and communications media. Computer storage media, such as memory 704, includes volatile and non-volatile, removable and non-removable media implemented in any method or technology for storage of information such as computer readable instructions, data structures, program modules or other data.

Computer storage media may include, but is not limited to, RAM, ROM, EPROM, EEPROM, flash memory or other memory technology, CD-ROM, digital versatile disks (DVD) or other optical storage, magnetic cassettes, magnetic tape, magnetic disk storage or other magnetic storage devices, or any other non-transmission medium that can be used to store information for access by a computing device. In contrast, communication media may embody computer readable instructions, data structures, program modules, or other data in a modulated data signal, such as a carrier wave, or other transport mechanism. As defined herein, computer storage media does not include communication media. Although the computer storage media (memory 704) is shown within the computing-based device 700 it will be appreciated that the storage and/or software and/or computer executable instructions as described herein may be distributed or located remotely and accessed via a network or other communication link (e.g. using communication interface 706).

For example, computing device 700 may be a churn prediction unit 102a or 207 for use in estimating subscriber churn behaviour in a telecommunications network 100 or 200 comprising a plurality of subscribers. The computing device 700 may include a processor 202, a memory 204, and a communication interface 206. The processor 202 is coupled to the memory 204, and the communication interface 206. The memory 204 may include instructions stored thereon, which when executed on the processor 202, causes the computing device to be configured to perform the algorithm(s), method(s), and/or process(es) of estimating subscriber churn behaviour and/or as described with respect to figures 1a-6b.

In operation, by way of example only, the computing device 700 may be configured to receive, from the network 100 or 200 via the communication interface 706, call data associated with the plurality of subscribers. The processor 702 may be configured to:

- generate a call graph of the plurality of subscribers based on the received call data associated with communications between subscriber pairs.
- for each time interval in a set of time intervals,

  • generate an influence map of how much each of the subscribers affects the other subscribers based on an updated call graph using call data associated with communications between subscriber pairs over the time interval;
  • determine a set of risk values of the subscribers churning based on a subscriber influence analysis of the influence map; and
  • store the set of risk values of the subscribers for each time interval; and

- estimate a set of potential churn subscribers comprising subscribers who are most likely to churn based on the set of risk values over the set of time intervals.

Additionally or optionally, the memory unit 704 may further comprise instructions stored thereon, which when executed on the processor 702, causes the processor 702 to perform the algorithm(s), method(s) and/or process(es) as described herein, by way of example only but not limited to, figures 1a-6b.

The term 'computer' is used herein to refer to any device with processing capability such that it can execute instructions. Those skilled in the art will realise that such processing capabilities are incorporated into many different devices and therefore the term 'computer' includes PCs, servers, base stations, eNBs, churn prediction units, network nodes and other network elements, mobile telephones, mobile stations, UEs, personal digital assistants, other portable wireless communications devices and many other devices.

Further modifications may be made to the examples or embodiments of the one or more of the apparatus and/or methods as described with reference to any one of figures 1a-7. For example, the above examples, apparatus and/or methods as described with reference to figures 1a-7 may be further modified to include one or more features from the following numbered paragraphs:

1. A method for determining subscribers who will churn with a subscriber influence analysis, in which a summarised weighted direct call graph of subscribers comprising CDR information between subscriber pairs within a certain period relating to the recent time periods, where the influence of subscribers to each other is analysed by obtaining said call detail records (CDR) belonging to subscribers of a telecommunication network is formed, characterised in that an influence map, in which how much each subscriber affects the others is determined using the following call indicators is obtained CD (Call Duration), DC (Drop Count), CC (Call Count) and SMS Count regarding the communication each subscriber makes with others through a telecommunication system after the said call graph has been formed.

2. A method for determining subscribers who will churn with a subscriber influence analysis according to paragraph 1, characterised in that the said call time parameter is calculated with all the call durations between a subscriber and another subscriber to the sum of all call durations of a subscriber ratio.

3. A method for determining subscribers who will churn with a subscriber influence analysis according to paragraph 1, characterised in that the said drop count parameter is calculated with all the drop counts between a subscriber and another subscriber to the sum of the drop count ratio.

4. A method for determining subscribers who will churn with a subscriber influence analysis according to paragraph 1, characterised in that the said call count parameter is calculated with all the call counts between a subscriber and another subscriber to the sum of all call counts ratio.

5. A method for determining subscribers who will churn with a subscriber influence analysis according to paragraph 1, characterised in that the said SMS count parameter is calculated with all the SMS counts between a subscriber and another subscriber to the sum of all SMS counts ratio.

6. A method for determining subscribers who will churn with a subscriber influence analysis according to any one of paragraphs 1 - 5, characterised in that the cumulative coefficient (weight) between subscribers is the combination of each coefficient and that this is obtained with the sum of the individual multiplications of the call duration, drop count, call count and SMS count parameters with an influence coefficient determined exclusive to each parameter depending on the significance of the parameter by the operator.

7. A method for determining subscribers who will churn with a subscriber influence analysis according to paragraph 6, characterised in that while making churn predictions an influence process flow (algorithm) is applied, in which

- the initial churners are loaded with a 1.0 Risk Value (Current Risk Value)
- the other remaining subscribers are loaded with a 0.0 Risk Value (Current Risk Value) and;
- each subscriber loses an amount from its energy to its neighbour and the lost energy in the said cycle is equal to the multiplication of the present energy K (distribution coefficient) of the subscribers,
- each subscriber gains an amount of energy from their neighbour and the gained energy depends on the influence (weight) between two subscribers,
- the final energy at the end of the cycle for each subscriber is calculated as follows:

$$present\_risk\_value = present\_risk\_value + gained\_risk\ value - lost\_risk\ value$$

until the previously determined largest cycle (MAX_ITERATION) number.

8. A method for determining subscribers who will churn with a subscriber influence analysis according to any one of the previous paragraphs, characterised in comprising a Progressive Runs logic, which goes back a week, instead of just its churners of the past week and in which the Risk Value Effect of the 3rd week of September is calculated and the total (Influential) Risk Value of an X subscriber is the cumulative sum of the Influential Risk Values of these two runs as follows:

$$RiskValue_X = RiskValue_{Run\ 1} * K_{Run1} + RiskValue_{Run\ 2} * K_{Run2}$$

9. A method for determining subscribers who will churn with a subscriber influence analysis according to any one of the previous paragraphs, characterised in that churn prediction verification is carried out with the comparison between the churn prediction tool results and the true subscriber churn list of the Telecom operator obtained after the predicted time interval is terminated and then the results are analysed with a LIFT value, i.e. as defined below which is calculated by proportioning the relative percentage of the port out (churner) ratio and the whole port out (churner) ratio for a given time interval.

$$LIFT = \frac{Ratio\ of\ Successfully\ Predicted\ Churners}{Actual\ port\ out\ (or\ churner)\ ratio}$$

The actual port out (or churn) ratio may be the total number of subscribers divided by the whole subscriber base who have ported out (churned) from the whole subscriber base during a given amount of time (e.g., 1 month). As an option, the ratio of successfully predicted churners may the number of successfully predicted churners divided by the actual number of churners.

Any reference to 'an' item refers to one or more of those items. The term 'comprising' is used herein to mean including the method blocks or elements identified, but that such blocks or elements do not comprise an exclusive list and a method or apparatus may contain additional blocks or elements.

Those skilled in the art will realise that storage devices utilised to store program instructions can be distributed across a network. For example, a remote computer may store an example of the algorithms, processes or methods described herein as software, computer code, computer instructions, applications or applets. A churn prediction unit, local or terminal computer may access the remote computer and download a part or all of the software and the like to run a program corresponding to the software. Alternatively, the local computer may download pieces of the software as needed, or execute some software instructions at the local terminal and some at the remote computer (or computer network). Those skilled in the art will also realise that by utilising conventional techniques known to those skilled in the art that all, or a portion of the software instructions may be carried out by a dedicated circuit, such as a DSP, programmable logic array, or the like.

The steps of the methods described herein may be carried out in any suitable order, or simultaneously where appropriate. Additionally, individual blocks may be deleted from any of the methods without departing from the spirit and scope of the subject matter described herein. Aspects of any of the examples or embodiments described above may be combined with aspects of any of the other examples described to form further examples without losing the effect sought.

The processes described herein should not be understood to prescribe a fixed order of performing the method steps described therein. Rather, the method steps may be performed in any order that is practicable. Although the present invention has been described in connection with specific exemplary embodiments, it should be understood that various changes, substitutions, and alterations apparent to those skilled in the art can be made to the disclosed embodiments without departing from the scope of the invention as set forth in the appended claims.

## Claims

1. A method for estimating subscriber churn behaviour in a telecommunications network comprising a plurality of subscribers, the network further including a churn prediction unit, the method, performed by the churn prediction unit, comprising:

   receiving, from the network, call data associated with the plurality of subscribers;
   generating a call graph of the plurality of subscribers based on the received call data associated with communications between subscriber pairs;
   for each time interval in a set of time intervals,
   generating an influence map of how much each of the subscribers affects the other subscribers based on an updated call graph using call data associated with communications between subscriber pairs over the time interval;
   determining a set of risk values of the subscribers churning based on a subscriber influence analysis of the influence map; and
   storing the set of risk values of the subscribers for each time interval; and
   estimating a set of potential churn subscribers comprising subscribers who are most likely to churn based on the set of risk values over the set of time intervals.

2. A method as claimed in claim 1, the step of generating the influence map, for each time interval, further comprising:

   updating the call graph of the plurality of subscribers based on the received call data of communications between subscriber pairs over the time interval; and
   determining, for each of the subscriber pairs, an influence weight comprising calculating a weighted sum of call indicator connection weights based on call indicators derived from the received call data of communications between said subscriber pairs over the time interval;
   wherein the influence weight for each subscriber pair indicates how much a first subscriber of the pair influences a second subscriber of the pair.

3. A method as claimed in claims 1 or 2, the step of determining the set of risk values of the subscribers based on a subscriber influence analysis of the influence map, for each time interval, further comprising:

setting a risk value for each subscriber to an initial value;

for each iteration until a maximum number of iterations,

calculating, for each subscriber, a lost risk value and gained risk value associated with each subscriber and their interactions with neighbouring subscribers based on the influence map of the updated call graph; and updating the risk value for each subscriber with the lost and gain risk values;

storing the risk value for each subscriber in the set of risk values of the subscribers for the time interval.

4. A method as claimed in any preceding claim, wherein each time interval in the set of time intervals comprises at least one from the group of one or more day(s), week(s), month(s) and year(s).

5. A method as claimed in claim 4, wherein each time interval in the set of time intervals is different.

6. A method as claimed in any one of claims 1 to 5, wherein estimating the set of potential churn subscribers further comprises filtering those subscribers from the set of potential churn subscribers that have call data characterised as atypical.

7. A method as claimed in claim 6, wherein a subscriber with call data that is characterised as atypical comprises one or more subscribers from the group of:

subscribers that have already churned by the most recent time interval;

subscribers in which their call data indicates incoming or outgoing call volumes above a maximum call threshold;

subscribers in which their call data indicates incoming or outgoing call volumes below a minimum call threshold; and

subscribers on a blacklist of subscribers.

8. A method as claimed in any one of claims 1 to 7, wherein:

receiving the call data further comprises obtaining call data record, CDR, information belonging to the plurality of subscribers of the telecommunication network, wherein the CDR information comprises data representative of at least the set of call indicators from the group of:

Call duration, CD;
Drop Count, DC;
Call Count, CC; and
Small message service, SMS, Count; and

determining the influence map further comprises determining the influence map using the obtained set of call indicators.

9. A method as claimed in claim 8, wherein generating the influence map further comprises:

determining, for each of the subscriber pairs, a set of call indicator connection weights and based on the set of call indicators, wherein the set of call indicator connection weights for each subscriber pair comprises at least one from the group of:

a CD connection weight;
a DC connection weight;
a CC connection weight; and
a SMS Count connection weight;

wherein:

said CD connection weight is calculated as the ratio of the CDs between a first subscriber of the subscriber pair and a second subscriber of the subscriber pair to the sum of all CDs for the first subscriber;

said DC connection weight is calculated as the ratio of the DCs between a first subscriber of the subscriber pair and a second subscriber of the subscriber pair to the sum of all the DCs for the first subscriber;

said CC connection weight is calculated as the ratio of the CCs between a first subscriber of the subscriber pair and a second subscriber of the subscriber pair to the sum of all CCs for the first subscriber; and

said SMS Count weight is calculated with as the ratio of SMS counts between a first subscriber of the subscriber pair and a second subscriber of the subscriber pair to the sum of all SMS counts for the first subscriber; and

determining, for each of the subscriber pairs, an influence weight based on a combination of the set of call indicator connection weights for that subscriber pair with a set of influence coefficients, wherein the set of influence coefficients is determined for each of the call indicator connection weights depending on the significance of the call indicator by the operator.

10. A method as claimed in claim 9, wherein a set of initial churner subscribers of the plurality of subscribers is determined based on previously churned subscribers from the telecommunication network and the step of determining a set of risk values of the subscribers churning further comprising:

setting the current risk value of each subscriber in the set of initial churner subscribers to an initial value of 1.0;
setting the current risk value of the plurality of subscribers, excluding the subscribers in the set of initial churner subscribers, to an initial value of 0.0; and
for a number of iterations until a maximum number of iterations,
for each subscriber in the plurality of subscribers,
calculating a first risk value for said each subscriber that the subscriber loses to its neighbouring subscribers based on the current risk value and a spreading coefficient;
calculating a second risk value for said each subscriber that the subscriber gains from its neighbouring subscribers based on the associated influence weight between the subscriber and a neighbouring subscriber; and
calculating a third risk value based on current risk value, the first risk value and the second risk value;
updating the current risk value to be the third risk value; and
storing the risk value for each subscriber in the set of risk values of the subscribers for the time interval.

11. A method as claimed in any of claims 1 to 10, the step of estimating the set of potential churn subscribers further comprising:

determining a set of final risk values for the plurality of subscribers based on:

$$RiskValue_j = \sum_{i=1}^{N} RiskValue_{j\,Run\,i} * K_{Run\,i}$$

wherein N is the number of time intervals in the set of time intervals, $RiskValue_{j\,Run\,i}$ is the risk value from the set of risk values for the $j$-th subscriber of the plurality of subscribers and the $i$-th time interval from the set of time intervals, and $K_{Run\,i}$ is a progressive run coefficient set for time interval $i$; and
estimating the set of potential churn subscribers based on final risk values for the plurality of subscribers.

12. A method as claimed in any one of claims 1 to 11, wherein churn prediction verification and machine learning for optimising over the set of time intervals based on a LIFT value expressed as:

$$LIFT = \frac{Percentage\ of\ Successfully\ Predicted\ Churners}{Percentage\ of\ actual\ churns}$$

13. An apparatus for estimating subscriber churn behaviour in a telecommunications network comprising a plurality of subscribers, the apparatus comprising a memory unit, a processor unit, and a communication interface, the processor unit coupled to the memory unit, and the communication interface, wherein the memory unit comprises instructions stored thereon, which when executed on the processor unit, causes the apparatus to be configured to:

receive, from the network, call data associated with the plurality of subscribers;
generate a call graph of the plurality of subscribers based on the received call data associated with communications between subscriber pairs;

for each time interval in a set of time intervals,

generate an influence map of how much each of the subscribers affects the other subscribers based on an updated call graph using call data associated with communications between subscriber pairs over the time interval;

determine a set of risk values of the subscribers churning based on a subscriber influence analysis of the influence map; and

store the set of risk values of the subscribers for each time interval; and

estimate a set of potential churn subscribers comprising subscribers who are most likely to churn based on the set of risk values over the set of time intervals.

14. The apparatus according to claim 13, wherein the memory unit further comprises instructions stored thereon, which when executed on the processor unit, causes the processor unit to perform the method according to any one of claims 1-12.

15. A tangible computer readable medium comprising computer program code stored thereon, which when executed on a processor of a computing device, causes the processor to perform a method according to any one of claims 1-12.

100

102A

CHURN
PREDICTION

102

COMMUNICATIONS INFRASTRUCTURE

106

101B

BS

BS

BS

UE

UE

UE

UE

101A

FIG. 1a

110

```
        ┌─────────────┐
        │    START    │
        └─────────────┘
               │
               ▼
    ┌──────────────────────┐
    │   RECEIVE CALL DATA   │ ～111
    └──────────────────────┘
               │
               ▼
    ┌──────────────────────┐
    │  GENERATE CALL GRAPH  │ ～112
    └──────────────────────┘
               │
               ▼
            ～113
         ╱─────────╲
   YES  ╱ HAVE ALL TIME ╲  NO
  ◄────╱ INTERVALS BEEN  ╲────┐
       ╲  COMPLETED?    ╱     │
        ╲─────────────╱       │         ～114
                              ▼
                    ┌────────────────────┐
                    │ CALCULATE SET OF RISK│
                    │   VALUES FOR        │
                    │   SUBSCRIBERS       │
                    └────────────────────┘
```

ESTIMATE SET OF POTENTIAL CHURN
SUBSCRIBERS BASED ON SET OF RISK
VALUES OVER THE SET OF TIME
INTERVALS

～115

TRANSMIT SET OF POTENTIAL CHURN
SUBSCRIBERS

～116

END

FIG. 1b

120

```
        ┌─────────────────────────────┐
        │           START             │
        │ (CALCULATE SET OF RISK VALUES│
        │  FOR SUBSCRIBERS FOR THIS TIME│
        │           INTERVAL)          │
        └─────────────────────────────┘
                      │
                      ▼
        ┌─────────────────────────────┐
        │  LOAD CALL DATA FOR THIS TIME│ ⌇ 121
        │           INTERVAL           │
        └─────────────────────────────┘
                      │
                      ▼
        ┌─────────────────────────────┐
        │  UPDATE CALL GRAPH FOR THIS TIME│ ⌇ 122
        │           INTERVAL           │
        └─────────────────────────────┘
                      │
                      ▼
        ┌─────────────────────────────┐
        │  CALCULATE THE INFLUENCE WEIGHTS│ ⌇ 123
        └─────────────────────────────┘
                      │
                      ▼
        ┌─────────────────────────────┐
        │  DETERMINING A SET OF RISK VALUES│ ⌇ 124
        │  OF THE SUBSCRIBERS CHURNING │
        └─────────────────────────────┘
                      │
                      ▼
        ┌─────────────────────────────┐
        │  SAVE THE SET OF RISK VALUES OF│ ⌇ 125
        │  SUBSCRIBERS FOR THIS TIME INTERVAL│
        └─────────────────────────────┘
                      │
                      ▼
        ┌─────────────────────────────┐
        │            END              │
        └─────────────────────────────┘
```

FIG. 1c

FIG. 2a

220

```
              ┌─────────────┐
              │    START    │
              └──────┬──────┘
                     │
        ┌────────────▼────────────┐
        │    PROVIDE CDR FILES    │───── 221
        └────────────┬────────────┘
                     │
        ┌────────────▼────────────┐
        │    ENCRYPT CDR FILES    │───── 222
        └────────────┬────────────┘
                     │
   ┌─────────────────▼─────────────────┐
   │ PROVIDE CRM SUBSCRIBER INFORMATION │──── 223
   └─────────────────┬─────────────────┘
                     │
        ┌────────────▼────────────┐
        │    ENCRYPT CDR FILES    │───── 224
        └────────────┬────────────┘
                     │
   ┌─────────────────▼─────────────────┐
   │  CREATE A CALL GRAPH (EDGE-ONLY)  │──── 225
   └─────────────────┬─────────────────┘
```

226

HAVE ALL PROGRESSIVE RUNS BEEN COMPLETED?

YES      NO

227

CALCULATE PROGRESSIVE RUNS (PROGRESSIVE_RUN)

SUM UP PROGRESSIVE RUN RISK VALUES (SUM PROGRESSIVE RUNs)    228

CALCULATE OFFNET RISK VALUE    229

FILTER THE INELIGIBLES    230

CALCULATE CALL CENTRE ENGAGEMENT RISK VALUE    231

CALCULATE AND REPORT THE TOTAL RISK VALUE PER SUBSCRIBER    212

END

FIG. 2b

300

```
        ┌─────────────────────────┐
        │          START          │
        │     (PROGRESSIVE_RUN)    │
        └─────────────────────────┘
                     │
                     ▼
        ┌─────────────────────────┐
        │ INCREASE RUN DATE BY ONE │      301
        │           WEEK           │
        └─────────────────────────┘
                     │
                     ▼
        ┌─────────────────────────┐
        │   CALCULATE CDR START    │      302
        │      AND END DATES       │
        └─────────────────────────┘
                     │
                     ▼
        ┌─────────────────────────┐
        │   LOAD CRDs AND UPDATE   │      303
        │      THE CALL GRAPH      │
        └─────────────────────────┘
                     │
                     ▼
        ┌─────────────────────────┐
        │ CALCULATE START AND END  │      304
        │  DATES FOR INITIAL       │
        │       CHURNERS           │
        └─────────────────────────┘
                     │
                     ▼
        ┌─────────────────────────┐
        │ MARK THE INITIAL CHURNERS│      305
        │ FOR THIS PROGRESSIVE RUN │
        └─────────────────────────┘
                     │
                     ▼
        ┌─────────────────────────┐
        │ CALCULATE THE INFLUENCE  │      306
        │     WEIGHTS PER CDR      │
        └─────────────────────────┘
                     │
                     ▼
        ┌─────────────────────────┐
        │   RUN THE RISK VALUE     │      307
        │   INFLUENCE ALGORITHM    │
        └─────────────────────────┘
                     │
                     ▼
        ┌─────────────────────────┐
        │  SAVE THE RISK VALUE     │      308
        │  VALUES FOR THIS         │
        │    PROGRESSIVE RUN       │
        └─────────────────────────┘
                     │
                     ▼
        ┌─────────────────────────┐
        │           END           │
        └─────────────────────────┘
```

FIG. 3

400

START
(FILTER_INELIGIBLES

401

HAVE ALL SUBSCRIBERS BEEN PROCESSED?

YES

NO

SELECT PRESENT SUBSCRIBER

402

403

IS THE SUBSCRIBER VERIFIED?

NO

DELETE SUBSCRIBER

404

YES

405

TOTAL COUNT > MAX_CALL_COUNT?

NO

YES

END

FIG. 4

500

505

510BE

510BEW

502

0.4

E

510ABW

B

510AB

0.2

510BF

510BFW

0.4

506

510DE

A

510AC

F

501

510ACW

510CFW

0.3

503

0.5

510CF

C

510DEW

0.4

0.3

510ADW

504

510AD

D

0.2

510CGW

510AG

510DGW

510CG

0.1

510DG

0.2

510AGW

G

507

FIG. 5

FIG. 6a

FIG. 6b

100/200

NETWORK

700

702

706

PROCESSOR

COMMUNICATION
INTERFACE

704

MEMORY 704A

704B

OPERATING
SYSTEM

DATA
STORE

CHURN
PREDICTION

704C

FIG. 7

Europäisches
Patentamt

European
Patent Office

Office européen
des brevets

**EUROPEAN SEARCH REPORT**

Application Number

EP 15 19 4161

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | US 2014/119522 A1 (PHADKE CHITRA A [US] ET AL) 1 May 2014 (2014-05-01) * the whole document * ----- | 1-15 | INV. G06Q10/04 G06Q50/00 G06Q30/02 |
| X,D | WO 2013/106924 A1 (IBM [US]; IBM CANADA [CA]) 25 July 2013 (2013-07-25) * the whole document * ----- | 1-15 | |
| X,D | US 8 249 231 B2 (CHAKRABORTY DIPANJAN [IN] ET AL) 21 August 2012 (2012-08-21) * the whole document * ----- | 1-15 | |

TECHNICAL FIELDS
SEARCHED      (IPC)

G06Q

The present search report has been drawn up for all claims

| Place of search | Date of completion of the search | Examiner |
|---|---|---|
| The Hague | 16 March 2016 | Cîrstet, Andrei |

CATEGORY OF CITED DOCUMENTS

X : particularly relevant if taken alone
Y : particularly relevant if combined with another
      document of the same category
A : technological background
O : non-written disclosure
P : intermediate document

T : theory or principle underlying the invention
E : earlier patent document, but published on, or
      after the filing date
D : document cited in the application
L : document cited for other reasons

......................................................................................
& : member of the same patent family, corresponding
      document

EPO FORM 1503 03.82 (P04C01)

## ANNEX TO THE EUROPEAN SEARCH REPORT
## ON EUROPEAN PATENT APPLICATION NO.

EP 15 19 4161

This annex lists the patent family members relating to the patent documents cited in the above-mentioned European search report.
The members are as contained in the European Patent Office EDP file on
The European Patent Office is in no way liable for these particulars which are merely given for the purpose of information.

16-03-2016

| Patent document cited in search report | | Publication date | Patent family member(s) | | Publication date |
|---|---|---|---|---|---|
| US 2014119522 | A1 | 01-05-2014 | CN | 104813353 A | 29-07-2015 |
| | | | EP | 2915081 A2 | 09-09-2015 |
| | | | KR | 20150065837 A | 15-06-2015 |
| | | | US | 2014119522 A1 | 01-05-2014 |
| | | | WO | 2014070573 A2 | 08-05-2014 |
| WO 2013106924 | A1 | 25-07-2013 | US | 2013185245 A1 | 18-07-2013 |
| | | | WO | 2013106924 A1 | 25-07-2013 |
| US 8249231 | B2 | 21-08-2012 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8249231 B
- US 2014119522 A1
- WO 2013106924 A